# EUROPÄISCHE PATENTSCHRIFT

(11) **EP 1 970 525 B1**
(45) Veröffentlichungstag und Bekanntmachung des Hinweises auf die Patenterteilung: **05.10.2016**
(21) Anmeldenummer: 08004871.3
(22) Anmeldetag: 14.03.2008
(51) Int. Cl.: E06B 9/264, E06B 3/667, E06B 3/54, E06B 7/10, F24J 2/04, E06B 7/02

(54) **Glasfassadenelement**
Glass façade element
Elément de façade en verre

(30) Priorität: 15.03.2007 AT 4092007
(43) Veröffentlichungstag der Anmeldung: 17.09.2008
(73) Patentinhaber: GIG Holding GmbH, 4800 Attnang-Puchheim (AT)
(72) Erfinder: Pohn, Adolf, Mag., 4842 Zell am Pettenfirst (AT)
(74) Vertreter: Ofner, Clemens

(56) Entgegenhaltungen:
- WO-A-2005/108729
- DE-A1- 3 345 642
- DE-U1-202004 001 204
- US-A- 3 253 644

## Beschreibung

Die Erfindung betrifft ein Glasfassadenelement, gemäß dem Oberbegriff des Patentanspruchs 1.

Bei vielen Verwaltungsgebäuden, insbesondere Bürohochhäusern, werden aus ästhetischen Gründen immer häufiger Glasfassaden eingesetzt. Zur Erhöhung des Komforts und zur Reduzierung des Energieverbrauchs werden dabei zunehmend zweischalige Glasfassadensysteme eingesetzt, bei denen der Zwischenraum zwischen der äußeren und inneren Fassadenhaut als thermischer Puffer genutzt wird. Wesentliche Vorteile dieses Systems sind der Schutz eines im Zwischenraum angeordneten Sonnenschutzes vor Wind, sowie verbesserte Schall- und Wärmedämmeigenschaften. Die Doppelfassade besteht somit im Wesentlichen aus zwei Glasschalen, die durch einen Luftpolster getrennt sind, der durch lüftungstechnische Maßnahmen mehr oder weniger bewegt sein kann. Bei hinterlüfteten Doppelfassaden unterliegt der Luftpolster einem häufigen Luftwechsel mit der Außenumgebung, wodurch der Luftzwischenraum für die natürliche Belüftung eines Gebäudeinnenraums benutzt werden kann. Nachteilig dabei sind allerdings die geringere Wärmedämmung sowie der zusätzliche Reinigungsaufwand für die zusätzlichen, im Wesentlichen ständig mit der Außenumgebung in Kontakt stehenden Glasoberflächen.

Zum Unterschied dazu gibt es zweischalige Glasfassadensysteme, bei denen der Luftpolster zwischen den beiden Glasschalen im Wesentlichen luftdicht eingeschlossen ist und dadurch eine gute thermische Pufferzone zwischen Gebäudeinnenraum und der Außenumgebung gebildet ist. Unvermeidbare Temperaturschwankungen im hermetisch eingeschlossenen Luftpolster sowie wetterbedingte Druckschwankungen bewirken allerdings Druckunterschiede zur Außenumgebung und dadurch entsprechende Verformungen der den Luftpolster einschließenden Glaselemente. Dies kann neben der optischen Beeinträchtigung der Gebäudeansicht auch Funktionsstörungen hervorrufen, indem die Befestigung der Glasschalen einer ständigen wechselnden Beanspruchung unterliegt oder beispielsweise zwischen den Glaselementen liegende Sonnenschutzelemente in ihrer Bewegung behindert werden.

Zur Vermeidung dieser Nachteile sind zweischalige Glasfassadensysteme entwickelt worden, bei denen der Luftpolster zwischen den zwei Glasschalen im Wesentlichen luftdicht eingeschlossen ist und nur über eine definierte Druckausgleichsöffnung und eine daran anschließende Druckausgleichsleitung mit der Außenatmosphäre verbunden ist. Aus DE 38 44 639 A1 ist eine Druckausgleichsvorrichtung für Isolierglasscheiben bekannt, bei der der luftgefüllte Scheibenzwischenraum zwischen zumindest zwei Einzelscheiben durch eine Druckausgleichsleitung mit der Atmosphäre verbunden ist. Die Druckausgleichsvorrichtung umfasst dabei eine Ventileinrichtung, die bei einem lediglich kurzzeitigen Druckunterschied zwischen Elementinnenraum und der Umgebungsluft einen Druckausgleich vermeidet. Derartige Druckausgleichsvorrichtungen ermöglichen somit gewissermaßen ein Atmen des im Scheibenzwischenraum eingeschlossenen Luftpolsters, hervorgerufen durch die naturgemäß auftretenden Temperaturschwankungen. Derartige Druckausgleichsvorrichtungen sind bei Isolierglasscheiben, die in einschaligen Glasfassadenelementen mit Scheibenzwischenräumen von wenigen Zentimetern bereits im Einsatz, solche Glasfassadenelemente erfüllen jedoch nur niedrigere Anforderungen bezüglich Wärmedämmung und Schallschutz.

WO2005/108729 A1 offenbart ein Glasfassadenelement gemäß den Merkmalen des Oberbegriffs des Anspruchs 1, und offenbart eine Isolierverglasung mit einer Einrichtung zum Kontrollieren der Atmosphäre im Scheibenzwischenraum, wobei im Scheibenzwischenraum auch verstellbare Sonnenschutz-Lamellen angeordnet sein können. Die Einrichtung zum Kontrollieren der Atmosphäre umfasst einen Strömungsweg zum Druckausgleich zwischen dem Innenraum der Isolierverglasung und der Außenumgebung sowie eine Trocknungsvorrichtung zur Entfeuchtung von in die Isolierverglasung einströmender Luft.

DE 20 2004 001 204 U1 offenbart ein Fassadenelement mit kombinierter Lichtlenkung und solarer Wärmegewinnung, bei dem ein Isolierglas-Fassadenelement durch eine weitere Glasscheibe um einen Luftraum erweitert wird, in dem sich eine Lamellenjalousie mit um 180° verstellbaren horizontalen Lamellen befindet. Diese Lamellen sind auf einer Seite Strahlungsstrahlungs-reflektierend und auf der anderen Seite Strahlungsstrahlungs-absorbierend. Die Aufgabe der Erfindung besteht darin, ein Glasfassadenelement bereitzustellen, das sich durch vorteilhafte bauphysikalische Eigenschaften, insbesondere eine hohe Wärmedämmung, positiven Einfluss auf die Energiebilanz eines Gebäudes und niedrige Kosten bei Montage und Wartung, auszeichnet.

Diese Aufgabe der Erfindung wird durch ein Glasfassadenelement mit den Merkmalen des Patentanspruchs 1 gelöst. Der gegenüber dem Stand der Technik vergrößerte Abstand zwisehen dem äußeren Glaselement und dem inneren Glaselement bewirkt eine Erhöhung der Wärmedämmung als auch eine verbesserte Schalldämmung eines derartigen Glasfassadenelements. Durch den erhöhten Abstand zwischen dem inneren und äußeren Glaselement sinkt die gegenseitige Beeinflussung von innerem und äußerem Glaselement, wodurch die jeweils zugeordneten Funktionen, insbesondere Wärmedämmung, Schalldämmung Beeinflussung des Strahlungsdurchgangs ohne nachteilige, gegenseitige Beeinflussung erfüllt werden können. Der über die Druckausgleichsöffnung und den anschließenden Strömungsweg mögliche Druckausgleich mit einem anderen Luftraum, insbesondere Außenumgebung oder dem Gebäudeinneren, ermöglich auch beim großen Abstand zwischen den Glaselementen und dementsprechend großen Volumenänderungen des eingeschlossenen Luftraums die Vermeidung von für die Konstruktion schädlichen Überdrucken bzw. Unterdrucken im Glasfassadenelement.

Der Abstand zwischen den Glaselementen von 60 mm bis 200 mm stellt genügend Platz für eine im Elementinnenraum angeordnete Verschattungseinrichtung, beispielsweise in Form eines Sonnenschutzsystems, zur Verfügung, in der ein weiteres Merkmal des Glasfassadenelements besteht. Mit dieser Verschattungseinrichtung ist eine Möglichkeit zur Beeinflussung des Lichtdurchganges gegeben, die mehrere Aufgaben erfüllen kann. Durch die Verschattungseinrichtung kann einerseits das Gebäudeinnere vor unerwünschten Einblicken von außen geschützt werden, in den meisten Fällen dient die Verschattungseinrichtung jedoch dazu, Blendung oder unerwünschte Wärmestrahlung durch Tageslicht, insbesondere Sonneneinstrahlung, im Gebäudeinneren zu vermeiden. Gleichzeitig soll für die im Gebäudeinneren befindlichen Personen die Sicht auf die Außenumgebung möglichst erhalten bleiben.

Um die Verschattungseinrichtung an die jeweiligen Gegebenheiten anpassen zu können, umfasst diese zumindest ein verstellbares Verschattungselement, insbesondere verstellbare Lichtlenklamellen. Als Verschattungselement kann jedoch auch ein Rollo, eine Jalousie, ein Lamellenstore oder ähnliches verwendet werden.

Eine gute Schutzwirkung vor unerwünschter Sonneneinstrahlung bei gleichzeitig gutem Durchblick zur Außenumgebung wird erzielt, da die Lichtlenklamellen eine Lamellenbreite von zumindest 50 mm aufweisen. Derartige Lamellenbreiten sind in den bisher bekannten Fassadenelementen mit geringerem Abstand zwischen den Glaselementen nicht verwendbar, was diesbezüglich einen großen Nachteil darstellt, da Lichtlenklamellen mit einer Breite von etwa 30 oder 40 mm zur Erzielung derselben Schutzwirkung vor Sonneneinstrahlung deutlich schräger gestellt werden müssen und dadurch die freie Durchsicht in die Außenumgebung viel stärker einschränken. In Zeiten starker Sonneneinstrahlung werden derartige Lichtlenklamellen zur Vermeidung von unangenehmen Temperaturanstiegen im Gebäudeinneren stark schräg gestellt, wodurch jedoch auch der Eintritt von erwünschtem, diffusem Tageslicht in das Gebäudeinnere stark eingeschränkt ist. In Gebäuden mit derartiger Verschattungseinrichtung ist es daher nicht selten der Fall, dass bei strahlendem Sonnenschein aufgrund der aktivierten Verschattungseinrichtung eine künstliche Innenraumbeleuchtung in Betrieb ist, was jedoch die Energiebilanz eines derartigen Gebäudes deutlich verschlechtern kann. Wird die Verschattungseinrichtung um genügend Tageslicht in den Gebäudeinnenraum durchzulassen nicht benutzt, wird dem aufgrund der Sonneneinstrahlung zwangsläufig entstehenden Temperaturanstieg mit Hilfe von Kühleinrichtungen mit enormem Energieeinsatz entgegengewirkt, wobei ein behagliches Raumklima durch diese Maßnahmen nur zum Teil erzielt werden kann.

Zur Erzielung eines hohen Wärmedämmwertes ist es von Vorteil, dass das innere Glaselement, ein Mehrscheibenisolierglaselement umfasst. Dazu kann vorzugsweise ein Dreischeiben-Isolierglaselement oder ein Vierscheiben-Isolierglaselement eingesetzt werden, das in diesem Fall einen großen Anteil zu den Wärmedämmeigenschaften des Gesamtelements beiträgt.

Das Mehrscheibenisolierglaselement kann dabei mit einem Gas, das eine geringere Wärmeleitfähigkeit als Luft aufweist, gefüllt sein, beispielsweise mit einem Edelgas, insbesondere Argon oder Krypton, wodurch der Wärmedurchgangswiderstand erhöht wird (Wärmedurchgangskoeffizient U sinkt). Mit einer Kombination aus einem inneren Glaselement in Form einer Dreifach-Isolierverglasung und einem äußeren Glaselement in Form einer Einfachverglasung können U-Werte von ≤ 0,5 W/m²K erzielt werden. Bei Gebäuden mit erhöhten Sicherheitsanforderungen kann von Vorteil sein, dass das äußere Glaselement ein Sicherheitsglaselement z.B. ein Verbundsicherheitsglas umfassen, das einen hohen Schutz gegen Beschädigung sowie hohe Sicherheit gegen herunterfallende Teile im Falle einer Beschädigung bietet.

Alternativ kann das äußere Glaselement auch ein Einscheibensicherheitsglaselement umfassen, das im Fall einer Beschädigung in ungefährliche kleine Bruchstücke zerfällt. Vorgenannte Sicherheitsglaselemente können auch auf der Innenseite angebracht werden, wenn dies durch die Art der Gebäudenutzung sinnvoll erscheint.

Sowohl das äußere als auch das innere Glaselement können an allen ihren Oberflächen eine Wärmestrahlung reflektierende Beschichtung aufweisen, insbesondere eine Metalldampfbeschichtung, z.B. mit Silberdampf. Ebenso sind auch absorbierende Beschichtungen der Glaselementoberflächen möglich, wobei die Auswahl von den Einsatzbedingungen abhängig sein kann. So kann beispielsweise eine der Außenumgebung zugewandte reflektierende Beschichtung dazu dienen, einen übermäßigen Wärmeeintrag durch das Glasfassadenelement in das Gebäudeinnere zu vermeiden oder durch eine Beschichtung der dem Gebäudeinneren zugewandten Oberflächen einen Wärmeverlust durch Wärmeabstrahlung an die Außenumgebung zu verringern.

Der die Glaselemente tragende und zueinander im Abstand fixierende Haltrahmen ist vorteilhaft aus Längsabschnitten eines Halteprofils zusammengesetzt, wobei das Halteprofil sowohl gerade als auch gekrümmt sein kann. Das Halteprofil weist dazu eine ausreichende Festigkeit auf, um die Gewichtskraft und die aus dem Einsatz des Glasfassadenelements entstehenden Belastungen mechanisch aufzunehmen. Durch das Zusammensetzen des Halterahmens aus Längsabschnitten eines Halteprofils kann das Halteprofil kostengünstig als Meterware vorrätig gehalten werden.

Das Halteprofil kann im eingebauten Zustand vom Gebäudeinneren in Richtung zur Außenumgebung betrachtet aus zumindest zwei, insbesondere zumindest drei Teilprofilen zusammengesetzt sein. Das Halteprofil muss demnach nicht einstückig ausgeführt sein, sondern kann in mehrere, einfacher und kostengünstiger herstellbare Teilprofile aufgeteilt sein, die jeweils speziell an die von ihm zu erfüllenden Funktionen angepasst sind.

Aus Gründen der Gewichtsersparnis, der Materialeinsparung und der verbesserten Wärmedämmung können die Teilprofile vorzugsweise als Hohlkammerprofile ausgebildet sein. Das Material eines Teilprofils kann dabei aus einem Metall, aufgrund des geringen Gewichts vorzugsweise Aluminium, bestehen, jedoch auch aus einem Nichtmetall, insbesondere aus einem Kunststoff, der sich insbesondere durch gegenüber einem Metall geringere Wärmeleitung auszeichnet. Durch die Verwendung eines Teilprofils aus einem Nichtmetall kann somit eine thermische Trennung zwischen dem Gebäudeinneren und der Außenumgebung erfolgen.

Bei einem Verbund aus Nichtmetallprofilen und Metallprofilen ist es von Vorteil, wenn das Teilprofil aus einem Nichtmetall zumindest annähernd in der Ebene des Mehrscheiben-Isolierglaselements angeordnet ist. Dadurch ist der Temperaturverlauf vom Gebäudeinneren zum Gebäudeäußeren im Bereich des Tragriemenrahmens ähnlich dem Temperaturbereich im Bereich der Glaselemente, was die Wärmedämmung des Gesamtelements vorteilhaft beeinflusst.

Eine einfache und sichere Montage der Glaselemente kann dadurch erfolgen, dass deren Ränder mit formschlüssigen Befestigungsleisten am Halterahmen fixiert werden. Die Befestigung der Glaselemente kann dadurch erfolgen, nachdem der Tragrahmen aus einzelnen Tragprofilabschnitten fertig zusammengebaut worden ist. Obwohl auch Klebeverbindung zwischen Glaselementen und dem Tragrahmen möglich sind, bringt die Verwendung von formschlüssigen Befestigungsleisten eine höhere Sicherheit gegen unbeabsichtigtes Lösen des Glaselements vom Halterahmen. Weiters ist ein Austausch einzelner Glaselemente ohne einen Ausbau eines Glasfassadenelements möglich.

Befestigungsmittel zur Fixierung der Befestigungsleisten am Halterahmen, insbesondere Schrauben, sind in der Frontalansicht des Glasfassadenelements vorteilhaft durch die Befestigungsleisten verdeckt, d.h. in der Frontalansicht nicht sichtbar, wodurch sowohl eine vorteilhafte Optik erzielt wird, als auch die Befestigungsmittel, sowie gegebenenfalls erforderliche Befestigungsbohrungen in den Befestigungsleisten vor direkter Bewetterung zumindest teilweise geschützt sind.

Um die Wärmeübertragung vom Halterahmen an die Außenumgebung zu reduzieren, kann an der Außenoberfläche des Halterahmens eine nichtmetallische Wärmedämmschicht angeordnet sein, wodurch die Temperatur des Halterahmens nicht allzu stark absinkt und dadurch Kondensationserscheinungen am kalten Halterahmen vermieden werden. Die Wärmedämmschicht kann dabei durch ein zwischen äußerem Glaselement und Befestigungsleiste bzw. äußerem Glaselement und Tragrahmen angeordnetes, gummielastisches Dichtungsprofil gebildet sein. Durch eine derartige Verlängerung des Dichtungsprofilquerschnitts über die eigentliche Dichtfläche hinaus, kann eine einfache und robuste Wärmedämmschicht für den Halterahmen gebildet werden.

Um die Gefahr einer Kondensation von Wasserdampf im Elementinnenraum zu verringern, ist vorgesehen, dass das Glasfassadenelement eine Trocknungseinrichtung zur zumindest teilweisen Entfeuchtung der im Elementinnenraum enthaltenen oder in diesen einströmenden Luft umfasst. Die Trocknungseinrichtung braucht dabei nur auf die im Elementinneren enthaltene Luft oder die in dieses einströmende Luft einzuwirken, während beispielsweise die aus dem Elementinnenraum bei Volumensvergrößerung austretende Luft durch einen anderen Strömungsweg geführt wird oder die Trocknungseinrichtung aktivierbar und deaktivierbar ist und in dieser Phase wenn das Glasfassadenelement gewissermaßen ausatmet nicht aktiviert ist. Die Trocknungseinrichtung umfasst dazu ein Wirkelement, das den Wasserdampfgehalt in der zu entfeuchtenden Luft zumindest teilweise verringert, beispielsweise indem an gekühlten Oberflächen des Wirkelements der in der Luft enthaltene Wasserdampf kondensiert und anderweitig abgeleitet wird oder der in der Luft enthaltene Wasserdampf vom Wirkelement adsorbiert wird. Die durch das Trocknungselement bewirkte Senkung der relativen Luftfeuchtigkeit im Elementinnenraum senkt gleichzeitig die zugehörige Taupunktstemperatur auf einen Wert, der um einen ausreichenden Sicherheitsabstand unterhalb der minimalen im Glasfassadenelement auftretenden Oberflächentemperatur ist und eine Kondensation an den Begrenzungsflächen des Elementinnenraums somit zuverlässig verhindert ist.

Die Trocknungseinrichtung ist im Strömungsweg angeordnet, und zwar in dem Sinne, dass Luft aus der Außenumgebung oder dem Gebäudeinneren, die über den Strömungsweg in den Elementinnenraum geleitet wird an einem Wirkelement der Trocknungseinrichtung vorbeigeleitet wird oder dieses durchdringt und dabei entfeuchtet wird. Die Trocknungseinrichtung muss dazu nicht körperlich innerhalb des Strömungsweges eingebaut sein, sondern kann selbst einen Teil des Strömungsweges bilden.

Da jede noch so geringe Temperaturveränderung im Elementinnenraum eine Volumenveränderung des eingeschlossenen Luftpolsters, oder eine Veränderung des Atmosphärendruck einen Druckunterschied zwischen Außenumgebung und Luftpolster im Inneren des Glasfassadenelements bewirken würde und dadurch unablässig mehr oder weniger Luft aus dem Elementinneren nach außen oder umgekehrt gepumpt würde, ist es vorteilhaft, wenn im Strömungsweg ein Ventil zur Beeinflussung des Strömungswiderstandes angeordnet ist. Damit kann aktiv in den Lufthaushalt des Elementinnenraums eingegriffen werden, wodurch einerseits mechanische Überbeanspruchungen des Glasfassadenelements durch große Druckunterschiede zur Außenumgebung bzw. zum Gebäudeinneren vermieden, als auch bauphysikalisch nachteilige Effekte am Glasfassadenelement vermieden werden. So geht beispielsweise bei einem Temperaturanstieg im Elementinneren durch Sonneneinstrahlung ein Teil der aufgenommenen Wärmeenergie durch den entweichenden Anteil der Luft im Elementinnenraum verloren; im Gegenzug wird bei einem Temperaturabfall im Elementinneren Luft von außen angesaugt, wobei durch die darin zwangsläufig enthaltene Luftfeuchtigkeit eine Kondensation des enthaltenen Wasserdampfs an einem kalten Bestandteil des Glasfassadenelements, insbesondere am äußeren Glaselement, erfolgen kann. Derartige Kondensationserscheinungen sollten aufgrund der dadurch bewirkten optischen Trübung als auch aufgrund möglicher Schäden durch diese Schwitzwasserbildung am Glasfassadenelement bzw. Gebäude vermieden werden. Durch dieses aktive Eingreifen in den Lufthaushalt des Glasfassadenelements können beispielsweise die Ausgleichsvorgänge in Tageszeiten verlegt werden, bei denen keine Gefahr einer Kondensatbildung im Elementinneren besteht, beispielsweise bei kalter und relativ trockener Außenluft. Der Strömungsweg kann dabei durch eine Veränderung seines Strömungswiderstands verändert werden, als auch durch die Verbindung des Elementinnenraums mit verschiedenen Lufträumen, beispielsweise entweder mit der Außenumgebung oder dem Gebäudeinneren durch ein Wegeventil.

Für die Aktivierung des Ventils bzw. der Ventile ist es von Vorteil, wenn diese eine mit einer Steuervorrichtung verbundene Betätigungseinrichtung, die insbesondere elektromagnetisch wirkt, aufweisen, wodurch eine händische Betätigung entfallen kann und die Betätigung automatisiert werden kann.

Die Eingangsgrößen der Steuervorrichtung werden von zumindest einem Sensorelement zur Erfassung von Lufttemperatur, Luftfeuchte oder Luftdruck bereitgestellt, mit dem die im Allgemeinen elektronische Steuervorrichtung kommunikationsverbunden ist. Das Sensorelement kann dabei im Elementinnenraum, und/oder im Gebäudeinneren und/oder der Außenumgebung des Glasfassadenelements angeordnet sein und Daten über das im jeweiligen Luftraum herrschende Klima an die Steuervorrichtung übermitteln. Dies kann dabei so programmiert sein, dass ein Lufteintritt in das Elementinnere nur dann möglich ist, wenn keine Gefahr einer Kondensation von Wasserdampf im Elementinnenraum besteht, also die Temperatur der den Elementinnenraum begrenzenden Glaselemente nicht unter der jeweiligen und anhand der Klimadaten berechenbaren Taupunkttemperatur liegt. Bei einer derartigen Ausführungsform des Glasfassadenelements ist der Elementinnenraum also nicht ständig druckausgeglichen mit der Außenatmosphäre bzw. dem Gebäudeinneren und kann somit phasenweise ein Unterdruck bzw. Überdruck im Elementinnenraum herrschen. Für die dabei auftretenden Druckunterschiede können in der Steuervorrichtung maximal zulässige Höchstwerte hinterlegt sein, sodass die durch Temperaturschwankungen des eingeschlossenen Luftvolumens entstehenden mechanischen Belastungen des Glasfassadenelements in jedem Fall unterhalb einer für die Konstruktion schädlichen Obergrenze bleiben.

Es ist weiters möglich, dass die Trocknungseinrichtung in einem Umluftbetrieb betrieben wird, bei dem Luft aus dem Elementinnenraum der Trocknungseinrichtung zugeführt wird und die entfeuchtete Luft anschließend über einen Rückluftweg wieder dem Elementinnenraum zugeführt wird. Die Trocknungseinrichtung kann bei dieser Betriebsweise sowohl außerhalb des Elementinnenraums bzw. des Glasfassadenelements angeordnet sein wobei die Verbindung mit entsprechenden Luftleitungen erfolgt, oder auch im Elementinnenraum enthalten sein, wobei bei dieser Anordnung eine Möglichkeit vorzusehen ist, die der Luft im Elementinnenraum antzogene Feuchtigkeit vom Wirkelement der Trocknungseinrichtung über eine Entfeuchtungsleitung nach außerhalb des Elementinnenraums abgeleitet wird, z.B. als flüssiges Kondensat oder als gasförmiger Wasserdampf, der bei einer Regeneration des Wirkelements, etwa durch Erhitzen von diesem wieder abgegeben wird.

Um die bauliche Anordnung und die Art der Betriebsweise der Trocknungsvorrichtung auf vielfältige Weise wählen bzw. ausführen zu können ist es von Vorteil, wenn zumindest ein Ventil, insbesondere ein steuerbares Wegeventil zur wahlweisen Verbindung der Trocknungseinrichtung mit dem Elementinnenraum oder mit einem außerhalb des Elementinnenraums gelegenen Luftraum, insbesondere dem Gebäudeinnenraum oder der Außenumgebung vorgesehen ist. Dieses kann beispielsweise im Strömungsweg, und/oder im Rückluftweg, und/oder in der Entfeuchtungsleitung angeordnet sein. Durch die Verwendung des Ventils oder mehreren Ventilen in Verbindung mit den entsprechenden Leitungen kann, wie zuvor beschrieben, das Ein- bzw. Ausströmen von Luft in bzw. aus dem Elementinneren gesteuert werden und/ oder die Luft zur Entfeuchtung durch die Trocknungseinrichtung gelenkt werden und/oder aus der Luft entzogene Feuchtigkeit aus der Trocknungseinrichtung in die Außenumgebung oder das Gebäudeinnere abgegeben werden.

Weiters ist es auch möglich, dass die Trocknungseinrichtung als Wirkelement ein feuchtigkeitsadsorbierendes Trocknungsmittel, insbesondere Silicagel enthält. Diese amorphe Erscheinungsform der Kieselsäure in festem körnigen Zustand ist stark hygroskopisch und kann der daran vorbeiführten Luft Wasserdampf entziehen und diese dadurch zumindest teilweise entfeuchten. Alternativ oder zusätzlich kann als Trocknungssubstanz Zeolith oder ähnliches feuchtigkeitsadsorbierendes Material eingesetzt werden.

Da die Aufnahmekapazität der Trocknungssubstanz beschränkt ist, ist es von Vorteil, wenn die Trocknungseinrichtung eine Beheizungseinrichtung zur bedarfsweisen Regenerierung der mit Feuchtigkeit gesättigten Trocknungssubstanz umfasst. Dadurch muss die Trocknungssubstanz nach Erreichen des Sättigungszustands nicht ersetzt werden, sondern kann mehrfach verwendet werden. Die Beheizungseinrichtung besteht dabei im einfachsten Fall aus einem mit elektrischer Energie versorgten Widerstandheizelement.

Um den Elementinnenraum des Glasfassadenelements frei von störenden Verunreinigungen zu halten, kann weiters im Strömungsweg ein Filterelement zur Rückhaltung von Staub, Festkörpern und Insekten angeordnet sein. Die den Elementinnenraum umgrenzenden Oberflächen der Glaselemente benötigen bei dieser Ausführung keine Reinigung und senken dadurch die Kosten der Gebäudewartung.

Zum Unterschied zu einer herkömmlichen hinterlüfteten zweischaligen Glasfassade, bei der große Lüftungsquerschnitte den Elementinnenraum mit der Außenumgebung bzw. dem Gebäudeinneren verbinden, besitzt das erfindungsgemäße Glasfassadenelement einen Strömungsweg mit geringem Querschnitt. Dieser weist bei geöffnetem Ventil an seiner engsten Stelle insbesondere einen Querschnitt, gewählt aus einem Bereich mit einer unteren Grenze von 0,1 mm², insbesondere 1 mm², und einer oberen Grenze von 200 mm³, insbesondere 100 mm², auf. Insbesondere bei Strömungsquerschnitten im Bereich der unteren Grenze erfolgt der Druckausgleich in gedrosselter Form, d.h. im Fall schneller Temperaturveränderungen im Elementinnenraum und dementsprechend schneller Volumenänderungen der eingeschlossenen Luftmenge kann sich zumindest vorübergehend ein Überdruck bzw. Unterdruck im Elementinnenraum aufbauen. Bei Strömungsquerschnitten im Bereich der oberen Grenze erfolgt der Druckausgleich im Wesentlichen ohne Verzögerung, d.h. im Elementinnenraum herrscht bei geöffnetem Ventil zu jedem Zeitpunkt der Druck des Luftraums, mit dem das Elementinnere strömungsverbunden ist.

Das Ventil, die Trocknungseinrichtung, die Beheizungseinrichtung und das Filterelement können zu einer Belüftungseinheit zusammengefasst sein, die in einem Gehäuse die genannten Teile enthält und nach einer Vorfertigung eine leichte Montage bzw. einfache Wartung ermöglicht. Die Belüftungseinheit ist zu diesem Zweck insbesondere außerhalb des Glasfassadenelements, vorzugsweise an der dem Gebäudeinneren zugewandten Oberfläche des Glasfassadenelements, angeordnet. Im Fall eines Defekts eines der Bestandteile der Belüftungseinheit kann diese einfach vom Gebäudeinneren her getauscht bzw. instand gesetzt werden. Insbesondere kann jedem Glasfassadenelement eine oder auch mehrere Belüftungseinheiten zugeordnet sein. Bei größerer Dimensionierung der Belüftungseinheiten ist auch denkbar, damit jeweils nicht nur ein Glasfassadenelement zu konditionieren sondern mehrere aneinandergrenzende Glasfassadenelemente.

Vorteilhaft ist jedenfalls wenn die Trocknungseinrichtungen bzw. Belüftungseinheiten dezentral angeordnet sind und deren Dimensionierung nicht von der Gebäudegröße abhängig ist.

Eine weitere Ausführungsform des Glasfassadenelements besteht darin, dass das Glasfassadenelement durch ein, zwei voneinander beabstandete Punkte des Tragrahmens verbindendes Zwischenprofil in zwei Teilflächen unterteilt ist. Dies kann von Vorteil sein, wenn beispielsweise die Glaselemente nur in kleineren Formaten, als das Gesamtformat des Glasfassadenelements eingesetzt werden, z.B. weil das Format des Glasfassadenelements größer ist als die größten verfügbaren Glaselemente. Das Zwischenprofil kann dabei so ausgebildet sein, dass auch der Elementinnenraum in zwei Teilvolumina unterteilt wird, die luftdicht voneinander getrennt sind. In diesem Fall weist jedes Teilvolumen eine eigene Druckausgleichsöffnung mit daran anschließendem Strömungsweg auf. Das Zwischenprofil kann jedoch auch nur an der äußeren bzw. der inneren Glashaut angeordnet sein, d.h. im Glasfassadenelement ist innen oder außen ein vollflächiges Glaselement eingesetzt, während an der zweiten Glashaut zwei oder mehrere Glaselemente zusammen das Glasfassadenelement verschließen. Dadurch kann auch die optische Erscheinung des Glasfassadenelements zwischen Außenumgebung und Gebäudeinnerem unterschiedlich ausgebildet sein.

Durch die Ausführung des Glasfassadenelements mit einem Zwischenprofil ist es möglich, dass an einer Teilfläche zumindest das äußere oder das innere Glaselement durch ein undurchsichtiges Paneel ersetzt ist. So kann beispielsweise im Bereich von Zwischendecken oder Zwischenwänden, wo vom Gebäudeinneren keine Durchsicht in die Außenumgebung erforderlich ist, ein teureres Glaselement durch ein kostengünstigeres, undurchsichtiges Paneel ersetzt sein. Insbesondere können dadurch auch Einbauten im Glasfassadenelement, beispielsweise eine in Ruhestellung befindliche Sonnenschutzeinrichtung, wie z.B. eine Jalousie, verdeckt sein.

Bei hohen Anforderungen an die Wärmedämmung kann das Paneel, insbesondere ein hochwärmedämmendes Vakuumpaneel umfassen, das sich durch sehr hohen Wärmedurchgangswiderstand auszeichnet. Das Paneel kann weiters in einem am Halterahmen schwenkbar gelagerten Flügelrahmen gehalten sein und dadurch der im Bereich des Paneels im Glasfassadenelement eingeschlossene Luftraum durch Öffnen des Flügelrahmens mit der Außenumgebung bzw. dem Gebäudeinneren lüftungstechnisch verbunden werden. Eine besonders vorteilhafte Anwendung dieser Anordnung besteht darin, dass der Flügelrahmen mit dem Paneel dem Gebäudeinneren zugewandt ist und das äußere Glaselement in diesem Teilbereich durch eine hinterlüftete Außenschale ersetzt ist. In diesem Fall kann durch Öffnen des Flügelrahmens mit dem Paneel das Gebäudeinnere lüftungstechnisch mit dem hinterlüfteten Elementinneren und damit auch der Außenumgebung verbunden werden, d.h. eine natürliche Lüftung des Gebäudeinneren durchgeführt werden. In diesem Fall teilt das Zwischenprofil das Elementinnere des Glasfassadenelements in zwei voneinander getrennte Teilvolumina. Die belüftete Außenschale kann dabei vorzugsweise durch ein Lochblech oder ein Streckmetall gebildet sein, wodurch ein guter Luftwechsel zwischen Außenumgebung und dem hinterlüfteten Elementinnenraum hergestellt wird, auch wenn keine zusätzlichen Belüftungsöffnungen in der Außenschale vorgesehen sind und diese feststehend ausgeführt ist. Alternativ dazu könnte die Außenschale durch ein geschlossenes Blech gebildet sein und mit entsprechenden Belüftungsöffnungen ausgestattet sein oder als schwenkbeweglicher Flügel an der Außenseite des Glasfassadenelements angeordnet sein.

Das Glasfassadenelement kann weiters so ausgeführt sein, dass durch ein Mehrscheiben-Isolierglaselement als inneres Glaselement und ein mit diesem etwa in gleicher Ebene liegendes thermisches Trennelement im Halterahmen und gegebenenfalls ein undurchsichtiges, wärmedämmendes Panel eine thermische Trennebene im Glasfassadenelement gebildet ist und zur mechanischen Verbindung des Glasfassadenelements mit einem feststehenden Gebäudeteil am Halterahmen zumindest ein auf der der Außenumgebung zugewandten Seite der thermischen Trennebene angeordneter Befestigungspunkt ausgebildet ist und ein an diesem Befestigungspunkt montiertes Trägerelement die thermische Trennebene am Halterahmen oder dem Panel in Richtung des Gebäudeinnenraums durchragt. Dadurch liegt das relativ schwere Isolierglaselement innerhalb des den Lastabtragungspunkt definierenden Befestigungspunktes, der dadurch etwa zwischen dem äußeren Glaselement und dem inneren Glaselement liegt, wodurch dieser niedrigere Lastmomente übertragen muss, als wenn er innerhalb des inneren Glaselements angeordnet wäre. Durch diese günstigere, zentrale Krafteinleitung in den Halterahmen kann an den Befestigungspunkten auf zusätzliche versteifende Maßnahmen weitgehend verzichtet werden.

Damit die Trägerelemente selbst keine Wärmebrücken bilden ist es dabei weiters vorteilhaft, wenn jeweils ein Trägerelement in Richtung von außen nach innen mehrere miteinander verbundene Trägerabschnitte umfasst und im Nahbereich der thermischen Trennebene ein Trägerabschnitt durch ein thermisches Trennelement mit hohem Wärmedurchgangswiderstand gebildet ist, also insbesondere aus einem Nichtmetall, vorzugsweise aus einem Kunststoffmaterial, gegebenenfalls auch mit gummielastischen Eigenschaften besteht. Dadurch können innerhalb und außerhalb der thermischen Trennebene liegende Trägerabschnitte aus Metall, die bei direkter Verbindung eine hohe Wärmebrücke darstellen würden weitgehend thermisch entkoppelt werden.

Die Aufgabe der Erfindung wird auch durch eine Elementglasfassade gelöst, die erfindungsgemäße Glasfassadenelemente umfasst. Bei der erfindungsgemäßen Elementglasfassade sind vorzugsweise aneinander grenzende Halterahmen zweier benachbarter Glasfassadenelemente mittels Steckverbindungselementen verbunden. Diese bewirkt eine gegenseitige Positionierung der Glasfassadenelemente beim Montagevorgang und stellt einen stabilen mechanischen Verbund zwischen den einzelnen Glasfassadenelementen her.

Die Steckverbindungselemente und diese aufnehmenden Stecknuten an den Glasfassadenelementen erstrecken sich vorzugsweise zumindest annähernd über den gesamten Umfang des Halterahmens. Zwischen den Glasfassadenelementen wird dadurch eine stabile Verbindung und eine genaue gegenseitige Positionierung erreicht. Die Steckverbindungselemente können zumindest teilweise aus gummielastischem Material gebildet sein, das geringfügige Toleranzen bei der Montage ausgleichen und diese daher erleichtern kann, weiters wird dadurch eine gewisse Beweglichkeit zum Ausgleich von Wärmeausdehnung der Glasfassadenelemente erzielt.

Die Stecknuten in den Halterahmen zur Aufnahme der Steckverbindungselemente können im Sinn einer leichteren Montage der Glasfassadenelemente zumindest annähernd parallel zu den Glaselementen orientiert sein. Die einzelnen Glasfassadenelemente können dann in Richtung ihrer Flächenebenen aneinander gefügt werden.

Um die Glasfassade gegen Witterungseinflüsse aus der Außenumgebung unempfindlich zu machen, kann zwischen aneinander grenzenden Halterahmen zweier Glasfassadenelemente ein durchgehendes gummielastisches Dichtelement angeordnet sein. Die Stoßstelle zwischen aneinandergrenzenden Glasfassadenelementen wird dadurch vor dem Eindringen von Niederschlagen als auch sonstigen Festkörpern, wie Staub, Laub oder Insekten geschützt. Durch entsprechende Ausformung können dabei die Dichtelemente gleichzeitig die Steckverbindungselemente bilden und dadurch sowohl die Funktion einer Abdichtung als auch einer gegenseitigen Fixierung erfüllen.

Die Erfindung wird im Nachfolgenden anhand der in den Zeichnungen dargestellten Ausführungsbeispiele näher erläutert.

Es zeigen jeweils in vereinfachter, schematischer Darstellung:
- Fig. 1: eine Frontalansicht einer erfindungsgemäßen Elementfassade mit acht Glasfassendenelementen in teilweise unterschiedlichen Ausführungen;
- Fig. 2: einen Querschnitt durch zwei aneinander grenzende Glasfassadenelemente gemäß Linie II-II in Fig. 1;
- Fig. 3: einen Querschnitt durch zwei aneinander grenzende Glasfassadenelemente gemäß der Linie III-III in Fig. 1;
- Fig. 4: einen Querschnitt durch zwei aneinander grenzende Glasfassadenelemente gemäß der Linie IV-IV in Fig. 1;
- Fig. 5: einen Querschnitt durch einen Zwischenrahmen an einem Glaselement gemäß der Linie V-V in Fig. 1;
- Fig. 6: einen Querschnitt durch eine weitere Form eines Zwischenrahmens an einem Glasfassadenelement gemäß der Linie VI-VI in Fig. 1;
- Fig. 7: einen Vertikalschnitt durch ein an einer Geschossdecke befestigtes Glasfassadenelement gemäß der Linie VII-VII in Fig. 1.
- Fig. 8: mehrere schematisch vereinfachte Ausführungsbeispiele Fig. 8a bis Fig. 8e für die Anordnung der Trocknungsvorrichtung und die Luftführung zwischen Trocknungsvorrichtung und Elementinnenraum.
- Fig. 9: mehrere schematisch vereinfachte Ausführungsbeispiele Fig. 9a bis 9d für die Luftführung zwischen Trocknungsvorrichtung und dem Elementinnenraum mittels einer Luftfördervorrichtung in Form einer Pumpe und Ventilen.

Einführend sei festgehalten, dass in den unterschiedlichen beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

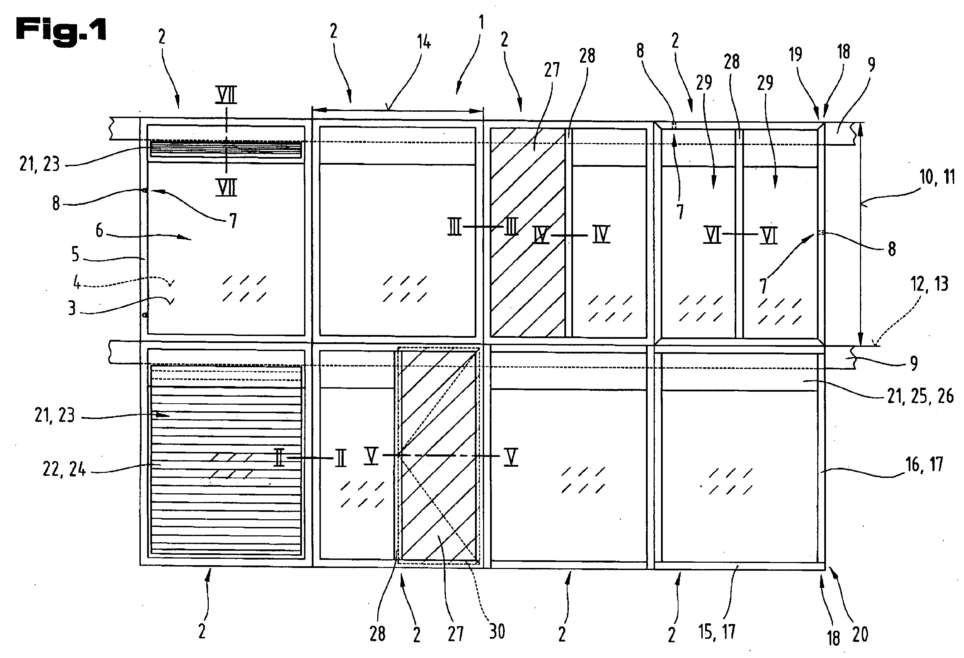

Fig. 1 zeigt eine Frontalansicht eines Ausschnitts einer Elementfassade 1, der aus acht erfindungsgemäßen Glasfassadenelementen 2 zusammengesetzt ist. In Fig. 1 sind dabei mehrere verschiedene Ausführungsformen eines Glasfassadenelements 2 vereinfacht dargestellt, auf die infolge noch näher eingegangen wird. Ein Glasfassadenelement 2 besteht dabei im Wesentlichen aus einem der Außenumgebung benachbarten äußeren Glaselement 3 und einem dem Gebäudeinneren zugewandten inneren Glaselement 4, die von einem Halterahmen 5 getragen werden und zueinander in einem Abstand fixiert werden. Von den beiden Glaselementen 3, 4 und dem an deren Rand umlaufenden Haltrahmen 5 wird ein im wesentlichen luftdichter Elementinnenraum 6 umschlossen, der ein bestimmtes Luftvolumen enthält. Dieses Luftvolumen ist Wärmeströmen aus der Außenumgebung, dem Gebäudeinneren, als auch angrenzenden Glasfassadenelementen 2 in Form von Wärmeleitungs- und Wärmestrahlungseinflüssen ausgesetzt und unterliegt daher im zeitlichen Ablauf gewissen Temperaturschwankungen. Diese Temperaturschwankungen bewirken im eingeschlossenen Luftvolumen Volumenänderungen, die bei einem vollständig abgedichteten Elementinnenraum 6 zu dementsprechenden Druckschwankungen im Elementinnenraum 6 führen würden. Ebenso würde bei einem hermetisch eingeschlossenen Luftvolumen jede Änderung des atmosphärischen Umgebungsdrucks Druckdifferenzen zwischen innen und außen hervorrufen. Da diese Druckschwankungen mechanische Verformungen an den Glasfassadenelementen 2 bewirken würden, die gegebenenfalls die mechanische Belastbarkeit der Glasfassadenelemente überschreiten könnten, als auch deren optische Erscheinung ungünstig beeinflussen können, ist der Elementinnenraum 6 durch eine Druckausgleichsöffnung 7 und einen daran anschließenden Strömungsweg 8 mit einem außerhalb des Glasfassadenelements 2 liegenden Luftraum in der Außenumgebung oder dem Gebäudeinneren verbindbar und dadurch zumindest zeitweise druckausgeglichen mit diesem Luftraum. Im dargestellten Ausführungsbeispiel ist dieser Luftraum durch die Außenumgebung gebildet. Bei einer Temperaturerhöhung im Elementinnenraum strömt somit Luft aus dem Elementinnenraum 6 in die Außenumgebung; umgekehrt kann bei einer Temperaturabsenkung im Elementinnenraum 6 Luft aus der Außenumgebung in den Elementinnenraum 6 einströmen.

Die Glasfassadenelemente 2 sind untereinander befestigt und bilden eine Außenhaut für ein Gebäude, mit dem sie beispielsweise an dessen Geschoßdecken 9 verbunden sind. Eine Gesamthöhe 10 der Glasfassadenelemente 2 entspricht dabei vorzugsweise einer Geschoßhöhe 11 des Gebäudes. In Fig. 1 fällt eine horizontale Teilungsebene 12 zwischen zwei übereinander liegenden Glasfassadenelementen 2 mit der Fußbodenoberkante 13 einer Geschoßdecke 9 zusammen. Da die aus den Glasfassadenelementen 2 zusammengesetzte Elementfassade 1 der Gebäudekonstruktion vorgehängt ist, kann man auch von einer Vorhangfassade sprechen. Durch die zwei voneinander beabstandeten Glaselemente 3, 4 kann man weiters auch von einer zweischaligen Elementfassade sprechen. Die Gesamtbreite 14 der Glasfassadenelemente 2 kann im Wesentlichen frei gewählt werden, aber wird in vielen Fällen bei allen Glasfassadenelementen 2 denselben Wert aufweisen.

Die Halterahmen 5 sind aus horizontalen Rahmenelementen 15 und vertikalen Rahmenelementen 16 zusammengesetzt, wobei diese im dargestellten Ausführungsbeispiel durch Längsabschnitte eines Halteprofils 17 gebildet sind. Das Halteprofil 17 ist dabei wirtschaftlich vorteilhaft für horizontale Rahmenelemente 15 und vertikale Rahmenelemente 16 identisch und kann dadurch bei den Rahmenecken 18 mit einer Gehrungsverbindung 19 verbunden sein. Bei unterschiedlichen Halteprofilen 17 bei horizontalem Rahmenelement 15 und vertikalem Rahmenelement 16 kann die Rahmenecke 18 als Stumpfstoß 20 ausgebildet sein. Im Elementinnenraum 6 eines Glasfassadenelements 2 können verschiedenste Einbauten mit verschiedenen Funktionen angeordnet sein, wobei bei den erfindungsgemäßen Glasfassadenelementen 2 Verschattungseinrichtungen 21 eingebaut sind, mit denen einerseits die Sicht von der Außenumgebung in das Gebäudeinnere unterbunden werden kann, sowie die Funktion eines Sonnenschutzes und eines Blendschutzes bewirkt werden kann, wobei insbesondere bei Verwaltungsgebäuden, die vorwiegend während der Tageszeit benutzt werden, der Sonnenschutz und Blendschutz im Vordergrund steht. Die Verschattungseinrichtung 21 umfasst dazu ein oder mehrere Verschattungselemente 22, mit denen der Lichtdurchgang durch das Glasfassadenelement 2 beeinflusst werden kann. In der Regel ist das Verschattungselement 22 verstellbar, wodurch die Verschattungseinrichtung an den jeweils vorhandenen Bedarf nach Schutz vor Sonneneinstrahlung, Blendung, Tagelichtdurchlass oder Sichtschutz angepasst werden kann. In Fig. 1 ist die Verschattungseinrichtung 21 durch eine Jalousie 23 gebildet, die als Verschattungselemente 22 eine Vielzahl von Lichtlenklamellen 24 umfasst. Im Gegensatz zu einer verstellbaren Verschattungseinrichtung 21 in Form einer Jalousie 23, die in Fig. 1 links oben dargestellt ist, kann auch eine feststehende Verschattungseinrichtung 21 in Form eines Blendschutzelements 25 vorgesehen sein, das einen Teilbereich der Glasfläche ständig verdeckt oder zumindest in der Lichtdurchlässigkeit reduziert. So kann das Blendschutzelement 25 beispielsweise durch eine Beschichtung 26 eines der Glaselemente 3, 4 gebildet sein. Die Beschichtung 26 kann beispielsweise in Form einer Lackierung oder einer Emaillierung der Glasoberfläche erfolgen. Weiters kann das Blendschutzelement 25 durch ein lichtundurchlässiges durchgehendes Blech oder ein teildurchlässiges Lochblech oder Streckmetall gebildet sein. Neben der Funktion als feststehender Sonnenschutz und Blendschutz kann das Blendschutzelement 25 auch als Sichtschutz für Einbauten im Elementinnenraum 6, wie z.B. eine Jalousie 23 in Ruhestellung oder auch als Sichtschutz für bestimmte Bestandteile der Gebäudekonstruktion, wie z.B. Geschoßdecken 9 oder Zwischenwände, eingesetzt werden.

Neben den bisher erwähnten Möglichkeiten einer verstellbaren bzw. feststehenden Verschattungseinrichtung 21, die den Lichtdurchlass im Bereich der Glaselemente 3, 4 beeinflusst, kann am Glasfassadenelement 2 eine Teilfläche des äußeren Glaselements 3 oder des Inneren Glaselements 4 oder beider Glaselemente 3, 4 durch ein undurchsichtiges Paneel 27 ersetzt sein. Das Paneel 27 muss dabei alle Anforderungen an eine Außenhaut, bezüglich Festigkeit und bauphysikalischer Eigenschaften, erfüllen und setzt sich beispielsweise aus flächigen Blechteilen, die die nötigen Festigkeitseigenschaften verleihen, sowie aus Dämmstoffen, die die Erfüllung der Wärmedämmanforderungen bewirken, zusammen. Als Dämmstoffe kommen dabei alle üblicherweise verwendeten Dämmstoffe, wie z.B. Mineralwolle, Steinwolle, Glaswolle, Polymerschäume, wie EPS, XPS, usw., in Frage. Der vom Paneel 27 verdeckte Teil des Glasfassadenelements 2 ist vom Glasanteil des Glasfassadenelements 2 durch einen Zwischenrahmen 28 abgetrennt, der im dargestellten Ausführungsbeispiel jeweils durch eine vertikalen Kämpfer gebildet ist. Ein derartiger Zwischenrahmen 28 in Form eines Kämpfers kann weiters dazu verwendet werden, die große Glasfläche eines Glasfassadenelements 2 in zwei oder mehrere Teilglasflächen 29 zu untergliedern, wie in Fig. 1 rechts oben dargestellt.

Der Zwischenrahmen 28 verbindet somit zwei voneinander distanzierte Punkte des Halterahmens 5 und kann dadurch entweder eine Begrenzung für das äußere Glaselement 3 oder das innere Glaselement 4 oder so beide Glaselemente 3, 4 bilden. Im letzten Fall erstreckt sich der Zwischenrahmen 28 über die gesamte Dicke des Glasfassadenelements 2 und kann dabei insbesondere auch den Elementinnenraum 6 in zwei voneinander luftdicht getrennte Teilvolumina unterteilen, die jeweils durch eigene Druckausgleichsöffnungen 7 und daran anschließende Strömungswege 8 mit einem außerhalb des Elementinnenraums 6 liegenden Luftraum verbunden ist.

Das Paneel kann, wie in Fig. 1, untere Reihe angedeutet, mittels eines Flügelrahmens 30 schwenkbar am Halterahmen 5 oder am Zwischenrahmen 28 gelagert sein. Dadurch kann das Gebäudeinnere durch Öffnen des Flügelrahmens 30 mit dem Paneel 27 lüftungstechnisch mit der Außenumgebung verbunden werden, wodurch eine natürliche Belüftung des Gebäudeinneren bewirkt werden kann.

Mögliche Ausführungsformen und Einzelheiten der Glasfassadenelemente 2 sind in den folgenden Figuren anhand von Schnittdarstellungen erläutert.

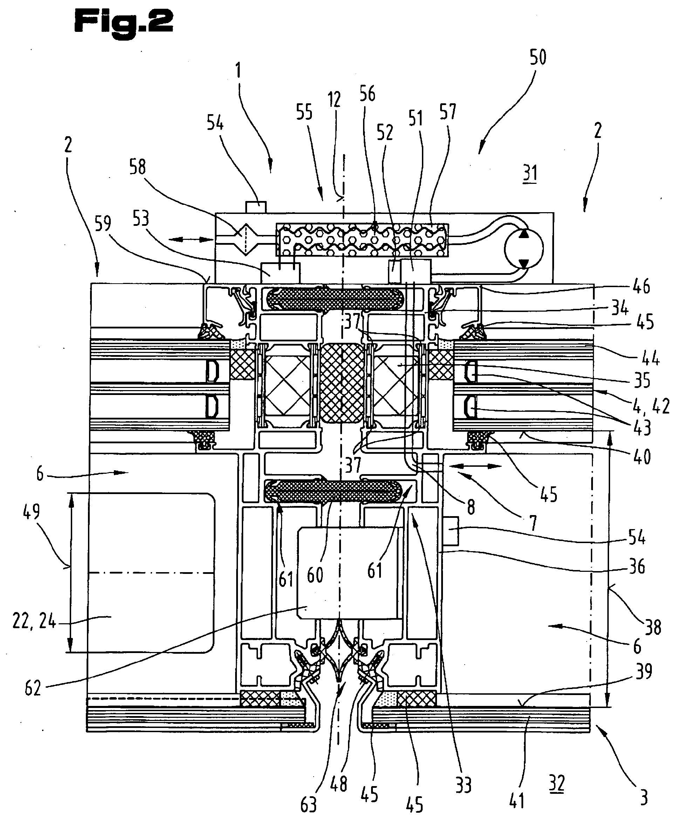

Fig. 2 zeigt einen Ausschnitt aus einem Querschnitt, gemäß der Linie II-II in Fig. 1, indem zwei Glasfassadenelemente 2 entlang einer Teilungsebene 12 aneinander grenzen. Da die an die Teilungsebene 12 anschließenden Abschnitte der beiden Glasfassadenelemente 2 identisch sind, wird im Folgenden der Einfachheit halber nur das in Fig. 2 rechts dargestellte Glasfassadenelement 2 beschrieben und mit Bezugszeichen versehen. Die Ausführungen betreffen jedoch auch das in Fig. 2 links der Teilungsebene 12 dargestellte Glasfassadenelement 2. Die aus den Glasfassadenelementen 2 zusammengesetzte Elementfassade 1 trennt einen Gebäudeinnenraum 31 von einer außerhalb des Gebäudes befindlichen Außenumgebung 32, wodurch aufgrund der funktionellen Eigenschaften der Elementfassade 1 im Gebäudeinnenraum 31 und in der Außenumgebung 32 im Allgemeinen unterschiedliche Klimabedingungen herrschen.

Der Halterahmen 5 des Glasfassadenelements 2 ist durch Längsabschnitte eines Halteprofils 33, dessen Querschnitt Fig. 2 entnehmbar ist, gebildet. Das Halteprofil 33 ist in Richtung vom Gebäudeinneren 31 zur Außenumgebung 32 aus einem inneren Teilprofil 34, einem mittleren Teilprofil 35 und einem äußeren Teilprofil 36 zusammengesetzt, die untereinander durch Formschlussverbindungen 37 fest miteinander verbunden sind. Alternativ oder zusätzlich dazu könnten die Teilprofile 34, 35, 36 untereinander auch mit zusätzlichen Befestigungsmitteln und/oder durch stoffschlüssige Verbindungen, wie z.B. Kleben, miteinander verbunden sein. Das Halteprofil 33 ist so ausgebildet, dass es das der Außenumgebung 32 zugewandte äußere Glaselement 3, sowie das dem Gebäudeinneren 31 zugewandte innere Glaselement 4 tragen und zueinander in einem festen Abstand 38 fixieren kann. Dieser Abstand 38 erstreckt sich also von der dem Gebäudeinneren 31 nächst liegenden Glasoberfläche 39 des äußeren Glaselements 3 bis zu einer der Außenumgebung 32 nächst liegenden Glasoberfläche 40 des inneren Glaselements 4. Der Abstand 38, zwischen den beiden Glaselementen 3, 4, beträgt im nicht maßstäblich dargestellten Ausführungsbeispiel etwa 135 mm, kann aber abweichend davon auch aus einem Bereich mit einer unteren Grenze von 60 mm und einer oberen Grenze von 200 mm liegen, wobei vorzugsweise ein Abstand 38 aus einem Bereich zwischen 100 und 150 mm gewählt wird.

Das äußere Glaselement 3 ist durch eine einzelne Glasscheibe 41 gebildet, während das innere Glaselement, wie dargestellt, durch ein Dreischeiben-Isolierglaselement 42 gebildet ist. Das äußere Glaselement 3 bildet dabei die äußere Schale der zweischaligen Elementfassade 1, die den Elementinnenraum 6 vor unmittelbaren Witterungseinwirkungen, wie Wind, Niederschlägen, extreme Kälte oder Hitze schützt, während das innere Glaselement 4 die innere Schale des zweischaligen Fassadensystems bildet, die den Großteil der Wärmedämmwirkung des Glasfassadenelements 2 ausmacht. Das Dreischeiben-Isolierglaselement 42 besteht aus drei mittels Abstandhaltern 43 zueinander in Abstand gehaltenen Glasscheiben, wobei der zwischen diesen eingeschlossene Raum zur Verbesserung der Wärmedämmwirkung zusätzlich mit einem von der Luft verschiedenen Gas, beispielsweise Argon oder Krypton, gefüllt sein kann. Weiters kann jede Oberfläche jeder Glasscheibe mit einer nicht dargestellten Beschichtung versehen sein, die je nach Anforderung reflektierend für Wärmestrahlung oder auch absorbierend für Wärmestrahlung gewählt sein kann. Als mögliche Beschichtungen kommen dafür beispielsweise Metalldampfbeschichtungen, beispielsweise mit Silberdampf oder selektive Lacke in Frage. Wie in Fig. 2 weiters angedeutet, kann die dem Gebäudeinneren 31 zugewandte innerste Glasscheibe des inneren Glaselements 4 durch ein Sicherheitsglas 44 in Form eines Einscheiben-Sicherheitsglases oder eines Verbundsicherheitsglases gebildet sein.

Die Glaselemente 3, 4 werden zur Vermeidung von Wärmebrücken und zur luftdichten Abdichtung nicht direkt am Halteprofil 33 gehalten, sondern zwischen Halteprofil 33 und Glaselement 3, 4 liegenden gummielastischen Dichtelementen 45. Diese sind entweder durch Formschluss oder Stoffschluss, beispielsweise durch Kleben, mit dem Halteprofil 33 verbunden und können aus allen gängigen Dichtungsmaterialien, die im Fenster- und Fassadenbau eingesetzt werden, wie z.B. Silikon, EPDM, TPE oder sonstigen gummielastischen Materialien bestehen.

Die Fixierung des inneren Glaselements 4 erfolgt dabei durch ein zusätzliches Halteprofil 46, während das äußere Glaselement 3 durch eine Befestigungsleiste 47 mit der erforderlichen Spannkraft am Halteprofil 33 fixiert wird. Die Befestigung der Befestigungsleiste 47 am Halteprofil 33 erfolgt mittels eines zusätzlichen Befestigungsmittels in Form einer Schraube 48, wobei die Befestigungsstelle für die Schraube 48 so angeordnet ist, dass deren Kopf bei Frontalansicht von der Befestigungsleiste 47 selbst verdeckt wird und dadurch optisch kaum oder gar nicht in Erscheinung tritt.

Um dem Halterahmen 5 eine ausreichende Stabilität zum Tragen der relativ schweren Glaselemente 3, 4 zu geben, sind das innere Teilprofil 34 und das äußere Teilprofil 36 aus einem Metall, beispielsweise Aluminium, sowie in Form eines Hohlkammerprofils, gebildet. Derartige Profile können wirtschaftlich in einem Strangpressverfahren hergestellt werden und besitzen dadurch eine hohe Steifigkeit bei gleichzeitig geringem Gewicht. Da Metallprofile jedoch eine gute Wärmeleitfähigkeit besitzen, ist das mittlere Teilprofil 35 aus einem Nichtmetall, insbesondere einem Kunststoff, wie z.B. Polyamid, gebildet, wodurch das Halteprofil 33 nicht als Wärmebrücke wirksam werden kann und das mittlere Teilprofil 35 als thermisches Trennelement zwischen den metallischen Teilprofilen 34 und 36 fungiert. Das mittlere Teilprofil 35 kann dabei wie abgebildet auch mehrteilig sein und in Form mehrerer Verbindungsstege ausgebildet sein. Wie Fig. 2 zu entnehmen ist, ist das mittlere Teilprofil 35, bezogen auf die Dicke des Glasfassadenelements 2 im selben Bereich angeordnet, wie das innere Glaselement 3, wodurch die vom inneren Glaselement 4 in Form eines Dreischeibenisolierglaselements 42 gebildete Wärmedämmschicht im Wesentlichen durch das mittlere Teilprofil 35 fortgesetzt wird. D.h. dass im Bereich des Halterahmens 5 ein ähnlicher Temperaturgradient, wie im Bereich der Glaselemente 3, 4 auftritt.

Im gezeigten Ausführungsbeispiel ist im linken Glasfassadenelement 2 ein Verschattungselement 22 in Form einer Lichtlenklamelle 24 dargestellt, mit der der Lichtdurchgang durch das Glasfassadenelement 2 beeinflusst werden kann. Die Lichtlenklamelle 24 besitzt dazu eine Lamellenbreite 49 ≥ 55 mm; im dargestellten Beispiel beträgt die Lamellenbreite 49 etwa 80 mm. Durch diese große Lamellenbreite können die Lichtlenklamellen 24 in den meisten Einsatzfällen annähernd horizontal eingestellt werden, wodurch eine gute Durchsicht aus dem Gebäudeinneren 31 in die Außenumgebung 32 gegeben ist, aufgrund der großen Lamellenbreite 49 aber gleichzeitig das Eindringen von Sonneneinstrahlung bei nicht allzu flach stehender Sonne weitgehend vermieden werden kann. Insbesondere in den warmen Sommermonaten kann dadurch der unerwünschte Wärmeeintrag durch die Sonnenstrahlung, der durch erhöhten Klimatisierungsaufwand ausgeglichen werden müsste, weitgehend vermieden werden und dadurch die Gesamtenergiebilanz des mit der erfindungsgemäßen Elementfassade 1 ausgestatteten Gebäudes verbessert werden. Die im Elementinnenraum 6 angeordnete Jalousie 23 ist durch das äußere Glaselement 3 vor Wind und Niederschlägen geschützt; weiters wird durch die innen liegende Wärmedämmschicht in Form des inneren Glaselements 4 eine unter Einwirkung von Sonnenstrahlung erfolgende Aufheizung der Lichtlenklamellen 24 und damit des Elementinnenraums 6 im Gebäudeinneren 31 nur in sehr stark abgeschwächter Form wirksam.

Der Elementinnenraum 6 ist vom Haltrahmen 5 sowie den Glaselementen 3, 4 im Wesentlichen luftdicht abgeschlossen und ist durch eine Druckausgleichsöffnung 7 und einen daran anschließenden Strömungsweg 8, beispielsweise in Form eines Schlauches, mit einem außerhalb des Elementinnenraums 6 befindlichen Luftraum verbunden. Im dargestellten Ausführungsbeispiel ist der Elementinnenraum 6 über die Druckausgleichsöffnung 7 und den Strömungsweg 8 mit dem Gebäudeinneren 31 druckausgeglichen, wobei dieser Druckausgleich mit Hilfe einer Belüftungseinheit 50, durch die der Strömungsweg 8 führt, beeinflusst werden kann. Die Belüftungseinheit 50 kann dabei in Form eines Gehäuses ausgebildet sein, indem zumindest eines der folgenden Elemente enthalten ist:
- Ventil 51: Das Ventil 51 dient zur Beeinflussung des Strömungsweges 8, indem dessen Strömungsquerschnitt durch das Ventil 51 verstellt wird. Der Strömungsweg 8 kann somit beispielsweise vollständig verschlossen werden und dadurch der Druckausgleich zwischen Elementinnenraum 6 und Gebäudeinnerem 31 unterbunden werden oder auch durch Öffnen des Ventils 51 ermöglicht werden. Das Ventil 51 weist insbesondere eine mit einer Steuervorrichtung 53 verbundene, elektromagnetische Betätigungseinrichtung 52 auf, wodurch eine manuelle Betätigung des Ventils 51 entfallen kann. Die Betätigungseinrichtung 52 enthält dazu von einer elektronischen Steuervorrichtung Steuersignale zum Öffnen bzw. Schließen des Strömungswegs 8. Die Bedingungen, unter denen ein Öffnen bzw. Schließen des Strömungswegs 8 erfolgt, sind dabei in der elektronischen Steuerung in Form von Steuerprogrammen hinterlegt. Diese Bedingungen können beispielsweise Zeitprogramme sein, d.h. ein Druckausgleich erfolgt abhängig von einem Zeitverlauf; alternativ oder zusätzlich dazu kann auch ein Klimaprogramm wirksam sein, dass einen Druckausgleich nur dann gestattet, wenn im Elementinnenraum 6 und dem jeweils damit verbundenen Luftraum, im Ausführungsbeispiel dem Gebäudeinneren 31, bestimmte Werte von Luftdruck, Luftfeuchtigkeit, Temperatur usw. herrschen. Die Steuervorrichtung 53 kann dazu mit Sensorelementen 54 kommunikationsverbunden sein, die einen oder mehre dieser Klimawerte im Elementinnenraum 6 und/oder dem Gebäudeinneren 31 und/oder Außenumgebung 32 umfassen.
- Trocknungseinrichtung 55: Der Strömungsweg 8 führt weiters durch eine Trocknungseinrichtung 55, die eine Kammer gefüllt mit Trocknungsmittel 56, beispielsweise in Form von körnigem Silicagel, umfasst. Das Trocknungsmittel 56 nimmt durch seine hygroskopische Wirkung aus der dieses durchströmenden Luft Wasserdampf auf und bewirkt, dass die in den Elementinnenraum 6 einströmende Luft relativ trocken ist und daher Kondensationserscheinungen im Elementinneren 6 vorgebeugt ist. Da sich das Trocknungsmittel 56 nach und nach mit dem aufgenommenen Wasser sättigt und die hygroskopischen Eigenschaften nachlassen, umfasst die Trocknungseinrichtung 55 eine Beheizungseinrichtung 57, mittels der das Trocknungsmittel 56 erhitzt werden kann und das absorbierte Wasser in Form von Wasserdampf wieder abgibt, wodurch das Trocknungsmittel 56 regeneriert wird und dadurch mehrfach verwendet werden kann, ohne durch Trocknungsmittel 56 ersetzt werden zu müssen. Die Beheizungseinrichtung kann, wie in Fig. 2 angedeutet, aus einem elektrisch betriebenen Widerstandheizelement bestehen, das ebenfalls von der elektrischen Steuervorrichtung 54 aktiviert werden kann. Beim Regenerieren des Trocknungsmittels 56 kann das Ventil 51 geschlossen sein, wodurch der vom Trocknungsmittel abgegebene Wasserdampf nicht in das Elementinnere 6 eintreten kann, sondern in das Gebäudeinnere 31 abgegeben wird. Weitere Betriebsweisen für die Trocknungseinrichtung 55 werden an späterer Stelle beschrieben.

Alternativ oder zusätzlich zur Verwendung eines Trocknungsmittels 56 als Wirkelement zur Reduktion des Feuchtegehalts der im Elementinnenraum 6 enthaltenen Luft, kann die Trocknungsvorrichtung 55 eine Kondensationstrocknungsvorrichtung mit Abgabe des Kondensats außerhalb des Elementinnenraums 6 umfassen. Das Wirkelement ist dabei durch eine gekühlte Oberfläche gebildet, entlang der die Luft vorbeiströmt und dabei darin enthaltene Feuchtigkeit am Wirkelement kondensiert. Zur Abkühlung des Wirkelements kann dieses beispielsweise ein Peltierelement umfassen oder durch ein solches gebildet sein, das sich durch Zufuhr elektrischer Energie abkühlen lässt.
- Filterelement 58: Im Strömungsweg 8 ist weiters ein Filterelement 58 angeordnet, das verhindert, dass mit der in den Elementinnenraum 6 einströmenden Luft Festkörper, insbesondere Staub, sonstige Festkörper oder Insekten, in den Elementinnenraum 6 gelangen. Dieser bleibt dadurch sauber und muss daher keiner regelmäßigen Reinigung unterzogen werden, wie dies bei konventionellen, hinterlüfteten, zweischaligen Glasfassaden erforderlich ist.

Die Belüftungseinheit 50 ist im Ausführungsbeispiel gemäß Fig. 2 außerhalb des Glasfassadenelements 2 an einer dem Gebäudeinneren 31 zugewandten Oberfläche 59 des Glasfassadenelements 2 angeordnet. Es ist daher vom Gebäudeinneren 31 leicht zugänglich und kann mit geringem Aufwand gewartet bzw. in Stand gesetzt werden.

Die beiden aneinander grenzenden Glasfassadenelemente 2 sind im Bereich der Teilungsebene 12 mittels Steckverbindungselementen 60 verbunden, die in entsprechende Stecknuten 61 der beiden Halteprofile 33 eingreifen. Die Steckverbindungselemente 60 und die Steckverbindungsnuten 61 verlaufen dabei im Wesentlichen parallel zu den Ebenen der Glaselemente 3, 4, wodurch in diese Richtung eine gewisse Beweglichkeit, z.B. zur Aufnahme von Wärmeausdehnungen, der Glasfassadenelemente 2 vorhanden ist, quer dazu in Richtung der Glasfassadenelementdicke bilden die Steckverbindungselemente 60 eine formschlüssige Verbindung zwischen zwei aneinander grenzenden Glasfassadenelementen 2. Zusätzlich zu diesen Steckverbindungselementen 60 kann die gegenseitige Positionierung der Glasfassadenelemente 2 mit einem Fixierwinkel 62 erfolgen, der mit einem Schenkel am Halterprofil 33 eines Glasfassadenelements 2 befestigt ist und mit dem zweiten Schenkel in eine Ausnehmung am Halteprofil 33 des zweiten Glasfassadenelements 2 eingreift. Die Steckverbindungselemente 60 sind im dargestellten Ausführungsbeispiel aus gummielastischem Material gebildet und verlaufen annähernd über den gesamten Umfang der beiden Halterahmen.

Im Bereich der Außenumgebung 32 ist zwischen den aneinander grenzenden Glasfassadenelementen 2 weiters eine Schlagregendichtung 63 angeordnet, die ein Eindringen von Wasser in das Innere der Elementfassade 1 verhindert.

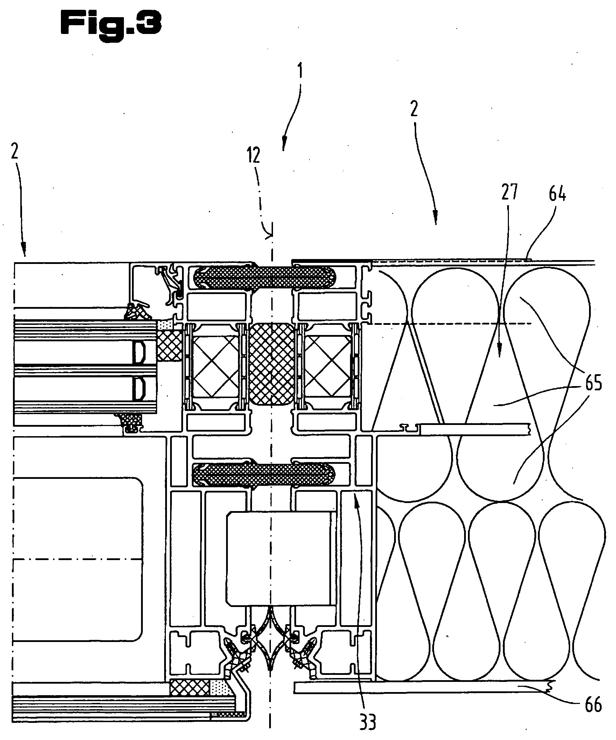

Fig. 3 zeigt einen Querschnitt gemäß der Linie III-III in Fig. 1. Durch eine Stoßstelle zweiter Glasfassadenelemente 2, wobei bei dem in der Fig. 3 rechten Glasfassadenelement 2 die Glaselemente 3, 4 durch ein Paneel 27 ersetzt sind. Das Paneel 27 setzt sich vom Gebäudeinneren 31 zur Außenumgebung 32 wie folgt zusammen.
- Innenschale 64 aus Blech: Die Innenschale 64 gibt dem Paneel die erforderliche Steifigkeit, wobei alle Anforderungen, die an eine Außenwand gestellt werden, erfüllt werden müssen.
- Wärmedämmschichten 65: An die Innenschale 64 schließen ein oder mehrere Wärmedämmschichten 65 an, die aus allen möglichen Wärmedämmmaterialien hergestellt sein können, wie z.B. Mineralwolle, Steinwolle, Glaswolle, natürliche Wärmedämmstoffe, Kunststoffdämmstoffe, wie z.B. XPS, IPS, usw.
- Außenschale 66: Den Abschluss zur Außenumgebung bildet eine Außenschale 66, die ebenfalls zur Festigkeit des Paneels 27 beiträgt und die Wärmedämmschichten 65 vor Umwelteinflüssen schützen. Das Paneel 27 ist aufgrund der Ausbildung von Innenschale 64 und Außenschale 66 aus einem Blech im Wesentlichen dampfdicht ausgeführt, kann jedoch auch noch zusätzliche Dampfsperren, beispielsweise in Form von Kunststofffolien oder gleichwertigem, umfassen.

Fig. 3 zeigt weiters, dass für das Paneel 27 das selbe Halteprofil 33, wie für die Halterung der Glaselemente 3, 4, eingesetzt werden kann.

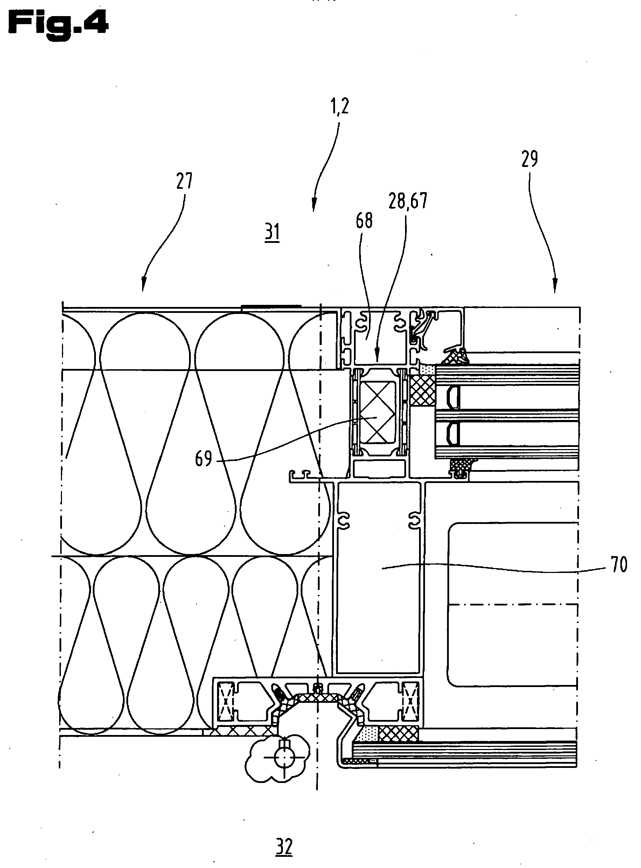

Fig. 4 zeigt einen Ausschnitt aus einem Querschnitt durch ein Glasfassadenelement 2, bei dem dessen Gesamtfläche durch einen Zwischenrahmen 28 unterteilt ist und zwar in eine Teilglasfläche 29, die wie anhand von Fig. 2 beschrieben aufgebaut ist, sowie ein Paneel 27, das wie anhand von Fig. 3 beschrieben, aufgebaut ist. Der Zwischenrahmen 28 besitzt im Querschnitt ein Zwischenprofil 67, das ähnlich wie das Halteprofil 33 vom Gebäudeinneren 31 zur Außenumgebung 32 aus drei Teilprofilen 68, 69, 70 zusammengesetzt ist. Das innere Teilprofil 68 und das äußere Teilprofil 70 sind dabei wieder durch ein Hohlkammerprofil, insbesondere aus Aluminiumstrangpressprofil, hergestellt und verleihen dem Zwischenrahmen 28 die erforderliche Festigkeit. Zur Erhöhung des Wärmedurchgangswiderstands ist das mittlere Teilprofil 69 wieder durch ein Kunststoffprofil gebildet.

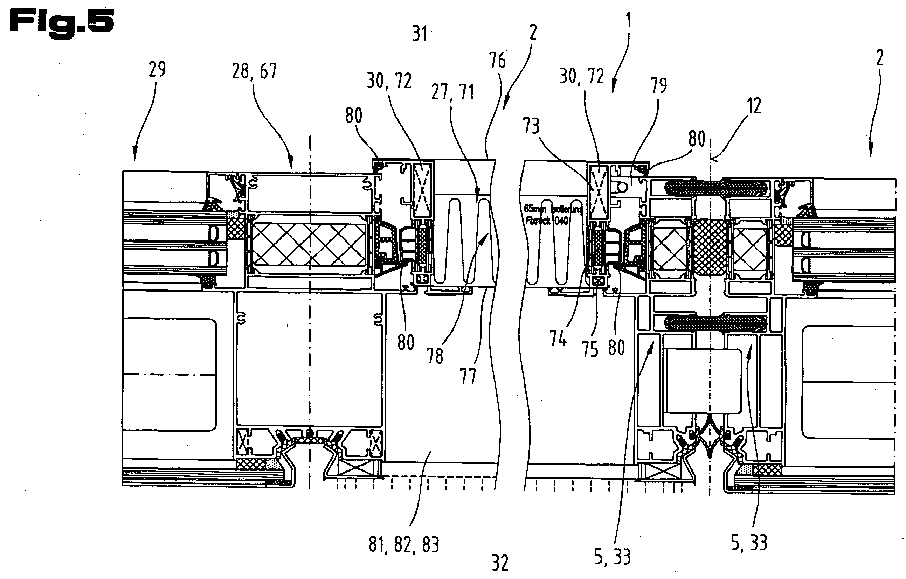

Fig. 5 zeigt einen Querschnitt gemäß der Linie V-V in Fig. 1. Durch zwei an einer Teilungsebene 12 aneinander grenzende Glasfassadenelemente 2, wobei das rechts der Teilungsebene 12 angeordnete Glasfassadenelement 2 wie anhand von Fig. 2 beschrieben aufgebaut ist. Das links der Teilungsebene 12 dargestellte Glasfassadenelement 2 ist ähnlich der Ausführung gemäß Fig. 4 durch einen Zwischenrahmen 28 mit einem Zwischenprofil 67 in eine Teilglasfläche 29 sowie eine Paneelfläche unterteil. Abweichend gegenüber dem anhand von Fig. 4 beschriebenen Paneel 29 ist in Fig. 5 die Paneelfläche 5 durch ein Flügelpaneel 71 gebildet, das sich etwa in der Ebene des inneren Glaselements 4 angeordnet ist und mittels eines Flügelrahmens 30 schwenkbar am Halteprofil 33 gelagert ist. Der Flügelrahmen 30 ist durch ein Flügelprofil 72 gebildet, das wiederum vom Gebäudeinneren 31 zur Außenumgebung 32 betrachtet aus drei Teilprofilen 73, 74, 75 zusammengesetzt ist. Das innere Teilprofil 73 und das äußere Teilprofil 75 sind, ähnlich wie beim Halteprofil 33 und beim Zwischenprofil 67 aus einem Metall-Hohlkammerprofil, insbesondere Aluminiumstrangpressprofil, gebildet und verleihen dem Flügelpaneel 71 die erforderliche Festigkeit; das mittlere Teilprofil 74 ist zur Erhöhung des Wärmedurchgangswiderstandes wieder aus einem Kunststoffprofil gebildet. Das Flügelpaneel 71 umfasst ähnlich wie das anhand von Fig. 4 beschriebene Paneel 27 eine innere Paneelschale 76 und eine äußere Paneelschale 77, wobei der zwischen diesen befindliche Zwischenraum wieder mit einer ein- oder mehrteiligen Wärmedämmschicht 78 ausgefüllt ist. Die Lagerung des Flügelrahmens 30 am Halterahmen 5 erfolgt mittels eines Beschlags 79, der ein Drehbeschlag oder ein Drehkippbeschlag sein kann. Die Abdichtung zwischen Flügelprofil 72 und Halteprofil 33 erfolgt dabei mit aus dem Fensterbau bekannten Anschlagdichtungen 80. Den Abschluss zur Außenumgebung 32 bildet in dieser Ausführung eine Außenschale 81, die beispielsweise durch ein Lochblech 82 oder ein Streckmetall 83 gebildet sein kann und dadurch feststehend ausgeführt sein kann oder ein Außenschale 81 aus einem durchgehenden Blech, die dafür , gegebenenfalls verschließbare, Lüftungsöffnungen aufweist oder ebenfalls wie ein Fensterflügel geöffnet werden kann.

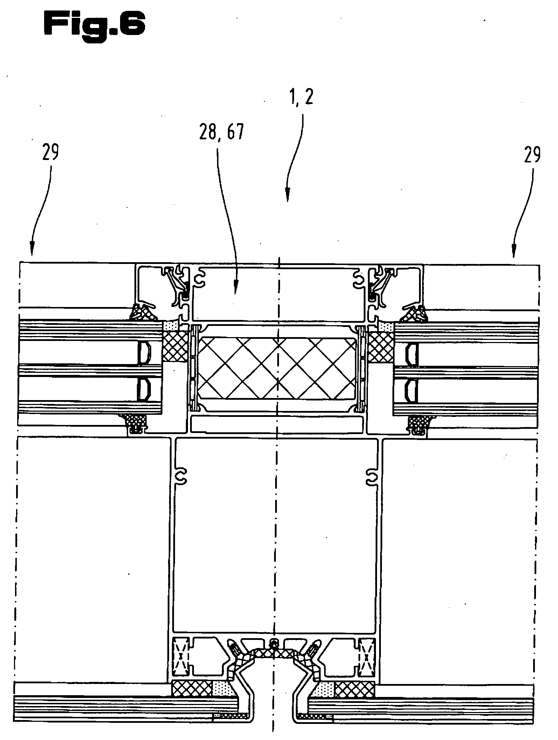

Fig. 6 zeigt einen Querschnitt gemäß der Linie VI-VI in Fig. 1 durch ein Glasfassadenelement 2, bei dem dessen Fläche durch einen Zwischenrahmen 28 mit einem Zwischenprofil 67 in zwei Teilglasflächen 29 unterteilt ist.

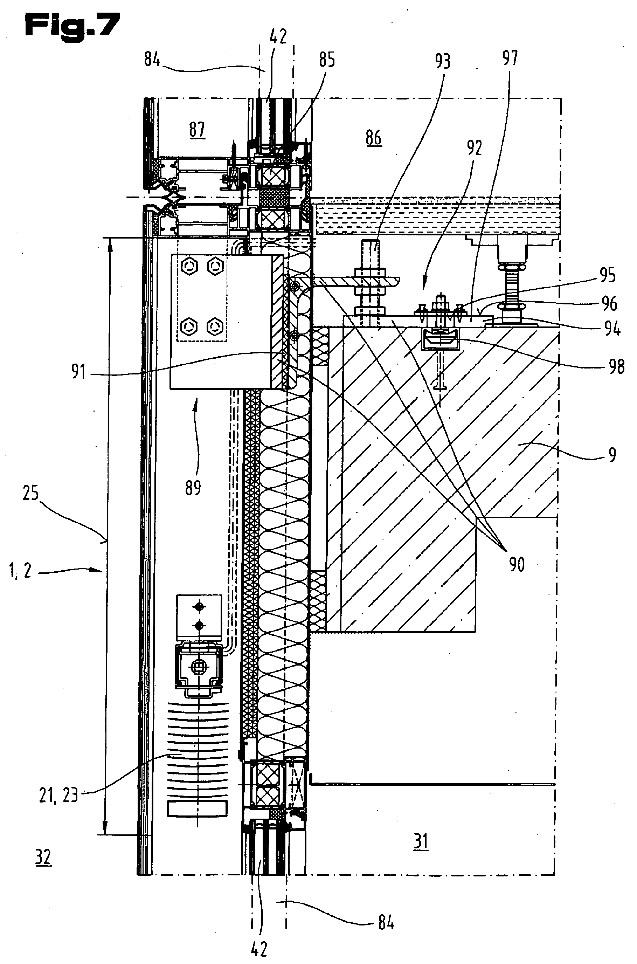

Fig. 7 zeigt in einer Schnittdarstellung gemäß Linie VII-VII in Fig. 1 eine mögliche Ausführungsform einer Aufhängung eines Glasfassadenelements 2 an einer Geschoßdecke 9, wobei die Geschoßdecke 9 dabei durch einen sonstigen, feststehenden und zur Aufnahme von durch die Elementglasfassade 1 bewirkten Kräften geeigneten Gebäudeteil z.B. eine Säule ersetzt sein kann.

Im Glasfassadenelement 2 ist durch seinen Aufbau eine thermische Trennfläche 84 ausgebildet, die bezogen auf die Dicke des Elements einen deutlich höheren Wärmedurchgangswiderstand aufweist, als die innen oder außerhalb daran anschließenden Bereiche des Glasfassadenelements 2. Diese Trennfläche 84 ist in der Ausführung gemäß Fig. 7 durch das Mehrscheiben-Isolierglaselement 42, das mittlere Teilprofil 35, das ein thermisches Trennelement 85 im Halterahmen 5 bildet, sowie das wärmedämmende Paneel 27 gebildet und liegt etwa in der Ebene des Mehrscheiben-Isolierglaselements 42, ist also nicht durch eine Oberfläche eines Bauteils des Glasfassadenelements 2 definiert, sondern als eine Schicht des Elements, die den überwiegenden Teil der wärmedämmenden Eigenschaften des Glasfassadenelements 2 bestimmt und dieses in einen dem Gebäudeinnenraum 31 zugewandten Innenbereich 86 oder so genannten Warmbereich und einen der Außenumgebung zugewandten Außenbereich 87 oder so genannten Kaltbereich trennt, wobei bei sehr hohen Außentemperaturen der Außenbereich 87 höhere Temperaturen als der Innenbereich 86aufweisen kann.

Die Befestigung des Glasfassadenelements 2 an einem feststehenden Gebäudeteil, beispielsweise einer Geschoßdecke 9 könnte nun einfach an der dem Gebäudeinnenraum 31 zugewandten Oberfläche des Halterahmens 5, also im Innenbereich 86 erfolgen. In der Ausführung gemäß Fig. 7 ist ein Befestigungspunkt 88 zur tragenden Verbindung zwischen Glasfassadenelement 2 und Gebäude jedoch außerhalb der thermischen Trennfläche 84 also im Außenbereich 87oder Kaltbereich angeordnet. An diesem Befestigungspunkt 88 ist ein Trägerelement 89 befestigt, das die thermische Trennfläche 84 in Richtung des Gebäudeinnenraums 31 durchragt und gleichzeitig an der Geschoßdecke 9 oder einem sonstigen feststehenden Gebäudeteil befestigt ist.

Das Trägerelement 89 kann dabei mehrteilig ausgeführt sein und mehrere miteinander verbundene Trägerabschnitte 90, die mit einander unlösbar oder auch unlösbar z.B. durch Schraubenverbindungen verbunden sein können, umfassen. Die Trägerabschnitte 90 können wie in Fig. 7 dargestellt aus Platten, Winkeln, Leisten, und sonstigen platten- und profilförmigen Teilen gebildet sein, aus Gründen der mechanischen Belastung hauptsächlich aus Metall z.B. Aluminium oder rostfreiem Stahl. Da ein zur Gänze aus Metall bestehendes Trägerelement 89 jedoch eine die thermische Trennfläche 84 durchragende Wärmebrücke bilden würde, ist ein Trägerabschnitt 90 im Bereich der thermischen Trennfläche 84 durch ein thermisches Trennelement 91 mit hohem Wärmeleitungswiderstand gebildet. Dieses Trennelement 91 ist in Fig. 7 durch ein plattenförmiges Kunststoffelement aus Polyamid, Polyethylen oder einem sonstigen Polymer mit hoher mechanischer Belastbarkeit gebildet. Durch die Anordnung des Trennelements 91 im Bereich oder vorzugsweise in der thermischen Trennfläche 84 ist diese möglichst wenig unterbrochen.

Der Befestigungspunkt 88 am Halterahmen 5 ist in Fig. 7 durch die Verschraubung einer Winkelplatte, die einen Trägerabschnitt 90 des Trägerelements 89 bildet mittels vier Schrauben gebildet. Zusätzlich oder alternativ kann auch beispielsweise das Trägerelement 89 axial in eine Hohlkammer des Halteprofils 17 eingreifen.

Zur leichteren Positionierung des Glasfassadenelements 2 relativ zur Geschoßdecke 9 kann das Trägerelement 89 auch eine Verstelleinrichtung 92 umfassen, beispielsweise eine Höheneinstellschraube 93 oder eine längsverstellbare Befestigungsplatte 94 mit Langloch 95 und Verzahnungsabschnitt 96, der mit einer Gegenverzahnung 97 an einer das Langloch 95 durchragenden Befestigungsschraube 98 zusammenwirkt und so eine sichere formschlüssige Fixierung der Längsposition der Befestigungsplatte 94 relativ zur Befestigungsschraube 98 bewirkt.

Diese Lage des Befestigungspunktes 88 außerhalb der schweren Mehrscheiben-Isolierglaselements 42 also in einer Ebene zwischen innerem Glaselement 4 und äußerem Glaselements 3 ist vorteilhaft, da diese Anordnung näher am Schwerpunkt des Glasfassadenelements 2 liegt und die im Befestigungspunkt 88 zu übertragenden Kräfte daher geringer sind.

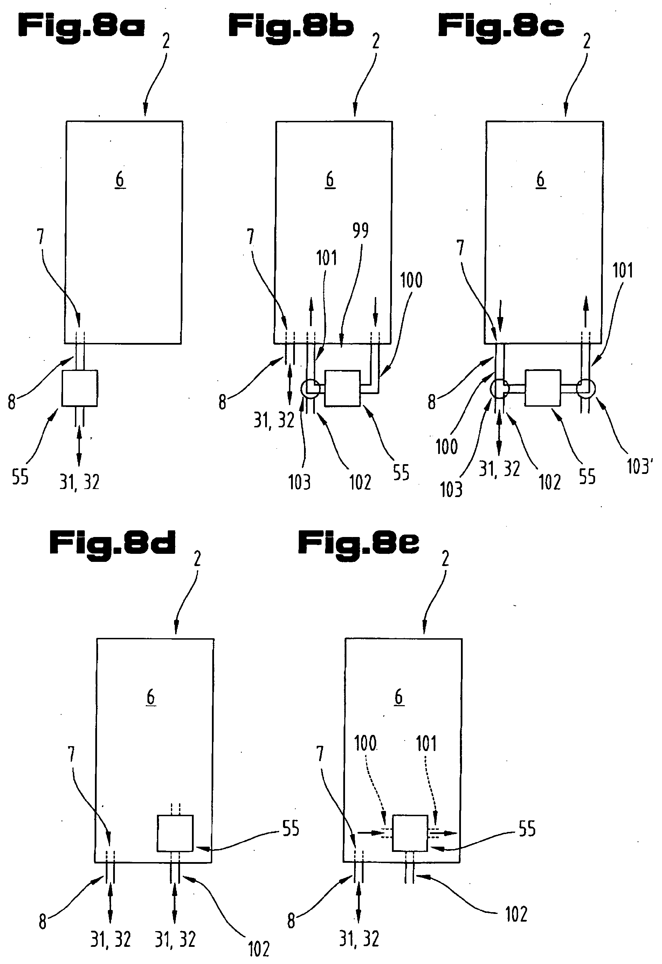

Die Figuren 8a bis 8e zeigen mehrere schematisch vereinfachte Ausführungsbeispiele für die Anordnung der Trocknungsvorrichtung 55 und die Luftführung zwischen Trocknungsvorrichtung 55 und Elementinnenraum 6 bzw. Außenumgebung 32 oder Gebäudeinnenraum 31.

Fig. 8a zeigt die bereits anhand von Fig. 2 beschriebene Anordnung der Trocknungsvorrichtung 55 im Verlauf des Strömungswegs 8, wodurch zumindest der in den Elementinnenraum 6 einströmenden Luft Feuchtigkeit entzogen werden kann und im Elementinnenraum 6 daher ein trockenes Klima herrscht, bei dem keine Gefahr von Kondenswasserbildung besteht.

Fig. 8b zeigt eine Anordnung der Trocknungsvorrichtung 55 in einem separaten Umluftkreis 99, bei dem eine Fortluftleitung 100 vom Elementinnenraum 6 zur Trocknungseinrichtung 55 führt und von dieser ein Rückluftweg 101 wieder zurück in den Elementinnenraum 6 führt. Die in der Trocknungseinrichtung aufgenommene Feuchtigkeit kann bei einem Regenerationsvorgang über eine Entfeuchtungsleitung 102 an die Außenumgebung 32 abgegeben werden. Die Umschaltung zwischen der Luftführung in den Rückluftweg 101 und die Entfeuchtungsleitung 102 erfolgt hier mit einem Wegeventil 103.

Fig. 8c zeigt eine ähnliche Anordnung der Trocknungseinrichtung 55 wie in Fig. 8, bei der der Strömungsweg 8, über den in der dargestellten Stellung des Wegeventils 103 der Druckausgleich zwischen Elementinnenraum 6 und Außenluft 31, 32 erfolgt, im Betriebszustand zur Entfeuchtung der Luft im Elementinnenraum 6 die Fortluftleitung 100 bildet und im Betriebszustand zur Regeneration der Trocknungseinrichtung 55 die Entfeuchtungsleitung 102 zur Abgabe der Feuchtigkeit an die Außenumgebung 32 bildet. Durch ein zusätzliches Wegeventil 103' kann im Betriebszustand Regenerieren quasi ein Umluftbetrieb mit der Außenluft erfolgen.

Fig. 8d zeigt eine Anordnung der Trocknungseinrichtung 55 im Elementinnenraum 6 mit einer nach außen führenden Entfeuchtungsleitung 102, wobei die Wirkungsweise der außerhalb liegenden Anordnung gemäß Fig. 8a entspricht.

Fig. 8e zeigt die Anordnung der Trocknungseinrichtung 55 im Elementinnenraum 6, ebenfalls mit einer nach außen führenden Entfeuchtungsleitung 102, die Betriebsweise entspricht dabei im Betriebszustand Luftentfeuchten dem Umluftbetrieb gemäß Fig. 8b oder 8c. Die Fortluftleitung 100 und der Rückluftweg 101 kann durch die innenliegende Anordnung der Trocknungseinrichtung 55 hier auch entfallen.

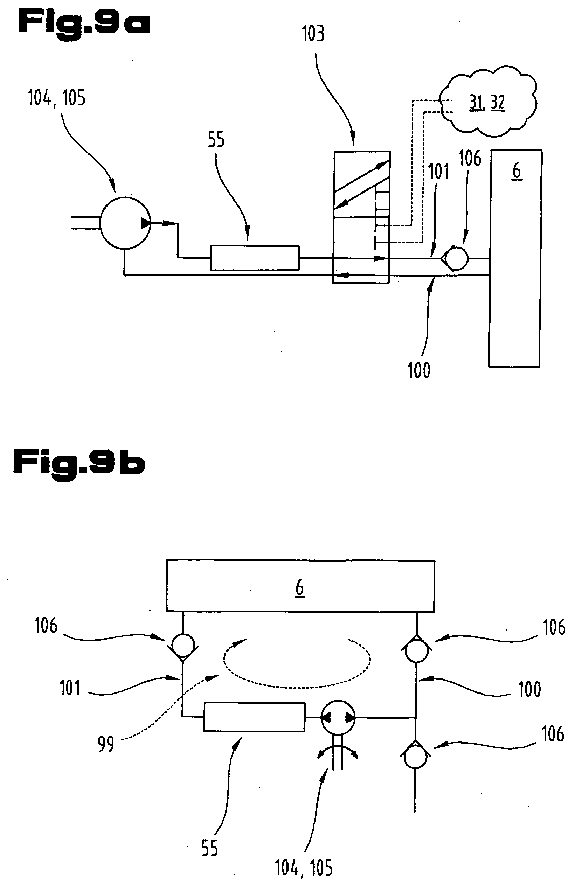

Die Figuren 9a bis 9d zeigen mehrere schematisch vereinfachte Ausführungsbeispiele für die Luftführung zwischen Trocknungseinrichtung 55 und dem Elementinnenraum 6 mit Verwendung einer Luftfördervorrichtung 104 in Form einer Pumpe 105 und verschiedenen Leitungsführungen und Ventilanordnungen bzw. Ventilarten.

Fig. 9a zeigt ein Schema, bei dem mit einer Luftfördereinrichtung 104 in Form einer Pumpe 105 Luft über die Fortluftleitung 100 aus dem Elementinnenraum 6 angesaugt und durch die Trocknungseinrichtung 55 über den Rückluftweg 101 in zumindest teilweise entfeuchtetem Zustand wieder in den Elementinnenraum 6 eingeblasen wird. Die Pumpe 105 kann dabei durch jede beliebige Art gebildet sein, wie beispielsweise eine Membranpumpe, eine Drehschieberpumpe, eine Kolbenpumpe, ein kleines Radialgebläse oder Axialgebläse und dergleichen. Die Luftführung kann im dargestellten Beispiel durch ein Wegeventil 103 beeinflusst werden. In der in Fig. 9a dargestellten Schaltstellung des Wegeventils 103 ist der zuvor beschriebene Umluftbetrieb zum Trocknen der im Elementinnenraum 6 enthaltenen Luft möglich. Die nicht dargestellte zweite Schaltstellung ermöglicht das Regenerieren der Trocknungseinrichtung 55 und Abgabe der Feuchtigkeit an die Umgebungsluft (Außenumgebung 32 oder Gebäudeinneres 31), beispielsweise durch Erhitzen des in dieser enthaltenen Trocknungsmittels 56 durch eine Beheizungseinrichtung 57 (siehe Fig. 2). In der zweiten Schaltstellung wird in einem Umluftbetrieb Außenluft durch die Trocknungseinrichtung 55 umgewälzt und dadurch die Feuchtigkeit aus dem Trocknungsmittel 56 abgeführt.

In Fig. 9b ist eine alternative Luftführung dargestellt, bei der die Luft aus dem Elementinnenraum 6 durch die Pumpe 105 im Uhrzeigersinn durch die Trocknungseinrichtung 55 umgewälzt werden kann und dabei entfeuchtet wird. Durch Drehrichtungsumkehr der Pumpe 105 wird der Luftstrom vom und zum Elementinnenraum 6 durch die Rückschlagventile 106 blockiert und bei gleichzeitiger Beheizung des Trocknungsmittels 56 in der Trocknungsvorrichtung in dieser enthaltene Wasserdampf an die Außenluft abgegeben. Durch das linksseitige Rückschlagventil 105 bildet sich bei dieser Regenerierung wieder ein leichtes Vakuum, das die Abgabe von Wasserdampf aus dem Trocknungsmittel 56 unterstützt dieser in Folge durch das Rückschlagventil 105 rechts unten ausgeblasen wird.

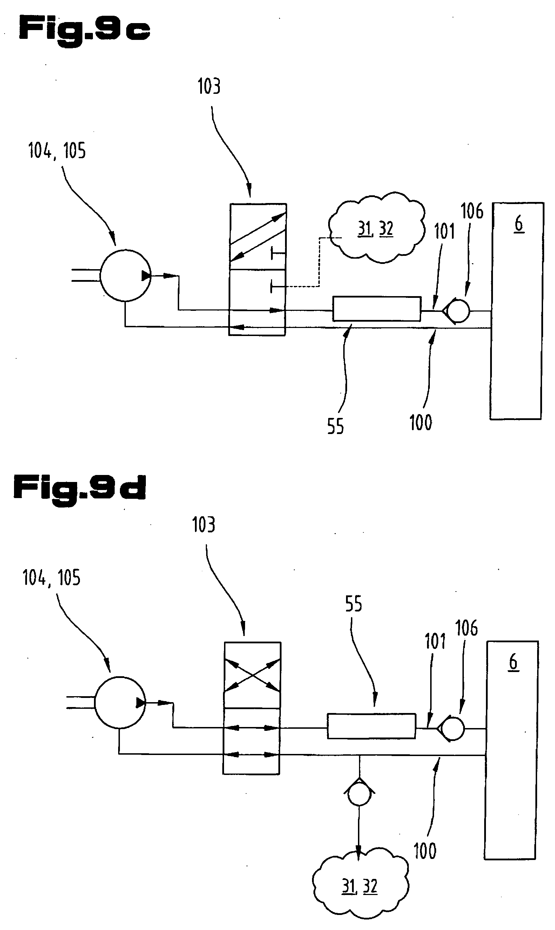

Die Ausführung gemäß Fig. 9c entspricht weitgehend der Ausführung gemäß Fig. 9a, wobei hier lediglich eine andere Bauart eines Wegeventils 103 eingesetzt ist, nämlich ein 5/2-WegeVentil. In der dargestellten ersten Schaltstellung ist wie bei der Ausführung in Fig. 9a ein Trocknungsbetrieb mit Umwälzung von Luft aus dem Elementinnenraum 6 durch die Trocknungseinrichtung 55 möglich. Die nicht dargestellte zweite Schaltstellung ermöglicht das Regenerieren der Trocknungseinrichtung 55 und Abgabe der Feuchtigkeit an die Umgebungsluft (Außenumgebung 32 oder Gebäudeinneres 31), beispielsweise durch Erhitzen des in dieser enthaltenen Trocknungsmittels 56 durch eine Beheizungseinrichtung 57 (siehe Fig. 2). Durch ein im Rückluftweg 101 angeordnetes Rückschlagventil 106 ist im Rückluftweg 101 eine Luftströmung vom Elementinnenraum 6 zur Trocknungseinrichtung unterbunden, wodurch in der Trocknungseinrichtung 55 ein leichtes Vakuum entstehen kann, das die Abgabe der Feuchtigkeit vom Trocknungsmittel 56 unterstützt und damit die Regenerierung durch Beheizen des Trocknungsmittels 56 schneller erfolgen kann oder in der gleichen Zeit bei einer niedrigeren Temperatur durchgeführt werden kann. Während etwa bei atmosphärischem Luftdruck die Regenerierung des Trocknungsmittels 56 in Form von Silicagel bei etwa 120°C erfolgt, kann durch das leichte Anlegen eines Vakuums die Regenerierung schon bei relativ niedrigen 70°C mit annähernd gleicher Geschwindigkeit erfolgen.

Fig. 9d zeigt eine Ausführung mit einem 4/2-Wege-Ventil 103 zwischen der Pumpe 105 und dem Elementinnenraum 6. Die dargestellte erste Schaltstellung entspricht von der Funktion den Ausführungen gemäß Fig. 9a oder 9c in den dort dargestellten ersten Schaltstellungen für den Trocknungsbetrieb, während die zweite Schaltstellung von der Wirkung dem Regenerierungsbetrieb aus Fig. 9cin der zweiten Schaltstellung entspricht, wobei die Feuchtigkeit beim Regenerieren durch ein zweites unteres Rückschlagventil an die Umgebung 31, 32 abgegeben wird.

Die anhand der Fig. 9a bis 9d erläuterte Verwendung einer Luftfördereinrichtung 104 ist selbstverständlich auch bei allen anderen Ausführungsformen gemäß den Fig. 8a bis 8e möglich, wodurch auch bei bauteilbedingten oder dimensionsbedingten (kleine Abmessungen) höheren Strömungswiderständen der Trocknungseinrichtung 55 oder der mit dieser verbundenen Luftleitungen eine ausreichende Umwälzung der zu trocknenden Luft beim Trocknungsbetrieb bzw. eine zuverlässige Abfuhr von Feuchtigkeit bei der Regenerierung sichergestellt ist und nicht von den Volumensveränderungen der im Elementinnenraum 6 enthaltenen Luft abhängig ist.

An dieser Stelle sei noch angemerkt, dass bei einem erfindungsgemäßen Glasfassadenelement 2 der Luftaustausch mit der Außenumgebung 32 oder dem Gebäudeinneren 31 zusätzlich zum Strömungsweg 8 auch durch Undichtigkeiten im Halterahmen 5 erfolgen kann, wenn das Glasfassadenelement 2 nicht 100-%ig abgedichtet ist sondern nur annähernd gasdicht ausgeführt ist. Schädliche Überdrücke oder Unterdrücke im Glasfassadenelement 2 können somit auch durch diese Undichtigkeiten zumindest teilweise werden, im allgemeinen wird jedoch getrachtet, diesen unkontrollierbaren Luftaustausch zu minimieren, da die durch Undichtigkeiten in das Elementinnere 6 eindringende Luft staubbeladen sein kann, wodurch wieder die Probleme mit Verschmutzung im Glasfassadenelement2 , d.h. bei den Glaselementen oder der Verschattungseinrichtung 21 auftreten können, wie bei hinterlüfteten Fassadensystemen, von denen sich die erfindungsgemäße Glasfassade durch die zumindest annähernd gasdichte Ausführung wesentlich unterscheidet.

Die Ausführungsbeispiele zeigen mögliche Ausführungsvarianten des Glasfassadenelements bzw. der Elementglasfassade, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Glasfassadenelements dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4; 5; 6; 7; 8a-8e; 9a-9d gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufsteltung**

| | | | |
|---|---|---|---|
| 1 | Elementfassade | 41 | Glasscheibe |
| 2 | Glasfassadenelement | 42 | Dreischeiben-Isolierglaselement |
| 3 | äußeres Glaselement | 43 | Abstandhalter |
| 4 | inneres Glaselement | 44 | Sicherheitsglas |
| 5 | Halterahmen | 45 | Dichtelement |
| | | | |
| 6 | Elementinnenraum | 46 | Halteprofil |
| 7 | Druckausgleichsöffnung | 47 | Befestigungsleiste |
| 8 | Strömungsweg | 48 | Schraube |
| 9 | Geschoßdecke | 49 | Lamellenbreite |
| 10 | Gesamthöhe | 50 | Belüftungseinheit |
| | | | |
| 11 | Geschoßhöhe | 51 | Ventil |
| 12 | Teilungsebene | 52 | Betätigungseinrichtung |
| 13 | Fußbodenoberkante | 53 | Steuervorrichtung |
| 14 | Gesamtbreite | 54 | Sensorelement |
| 15 | horizontales Rahmenelement | 55 | Trocknungseinrichtung |
| | | | |
| 16 | vertikales Rahmenelement | 56 | Trocknungsmittel |
| 17 | Halteprofil | 57 | Beheizungseinrichtung |
| 18 | Rahmenecke | 58 | Filterelement |
| 19 | Gehrungsverbindung | 59 | Oberfläche |
| 20 | Stumpfstoß | 60 | Steckverbindungselement |
| | | | |
| 21 | Verschattungseinrichtung | 61 | Stecknut |
| 22 | Verschattungselement | 62 | Fixierwinkel |
| 23 | Jalousie | 63 | Schlagregendichtung |
| 24 | Lichtlenklamelle | 64 | Innenschale |
| 25 | Blendelement | 65 | Wärmedämmschicht |
| | | | |
| 26 | Beschichtung | 66 | Außenschale |
| 27 | Paneel | 67 | Zwischenprofil |
| 28 | Zwischenrahmen | 68 | Teilprofil |
| 29 | Teilglasfläche | 69 | Teilprofil |
| 30 | Flügelrahmen | 70 | Teilprofil |
| | | | |
| 31 | Gebäudeinnenraum | 71 | Flügelpaneel |
| 32 | Außenumgebung | 72 | Flügelpaneel |
| 33 | Halteprofil | 73 | Flügelprofil |
| 34 | Teilprofil | 74 | Teilprofil |
| 35 | Teilprofil | 75 | Teilprofil |
| | | | |
| 36 | Teilprofil | 76 | Paneelschale |
| 37 | Formschlussverbindung | 77 | Paneelschale |
| 38 | Abstand | 78 | Wärmedämmschicht |
| 39 | Glasoberfläche | 79 | Beschlag |
| 40 | Glasoberfläche | 80 | Anschlagdichtung |
| | | | |
| 81 | Außenschale | | |
| 82 | Lochblech | | |
| 83 | Streckmetall | | |
| 84 | Trennfläche | | |
| 85 | Trennelement | | |
| | | | |
| 86 | Innenbereich | | |
| 87 | Außenbereich | | |
| 88 | Befestigungspunkt | | |
| 89 | Trägerelement | | |
| 90 | Trägerabschnitt | | |
| | | | |
| 91 | Trennelement | | |
| 92 | Verstelleinrichtung | | |
| 93 | Höheneinstellschraube | | |
| 94 | Befestigungsplatte | | |
| 95 | Langloch | | |
| | | | |
| 96 | Verzahnungsabschnitt | | |
| 97 | Gegenverzahnung | | |
| 98 | Befestigungsschraube | | |
| 99 | Umluftkreis | | |
| 100 | Fortluftleitung | | |
| | | | |
| 101 | Rückluftweg | | |
| 102 | Entfeuchtungsleitung | | |
| 103 | Wegeventil | | |
| 104 | Luftfördervorrichtung | | |
| 105 | Pumpe | | |
| | | | |
| 106 | Rückschlagventil | | |

## Patentansprüche

1. Glasfassadenelement (2) umfassend ein einem Gebäudeinnenraum (31) zugewandtes inneres Glaselement (4), ein parallel dazu in einem Abstand (38) angeordnetes, einer Außenumgebung (32) zugewandtes äußeres Glaselement (3) und zumindest einen die Glaselemente (3, 4) an ihren Rändern umlaufend miteinander verbindenden und im Abstand (38) fixierenden Halterahmen (5), wobei die Glaselemente (3, 4) und der Halterahmen (5) den von ihnen umgrenzten Elementinnenraum (6) bis auf zumindest eine Druckausgleichsöffnung (7) zumindest annähernd gasdicht umschließen und der Elementinnenraum (6) über die Druckausgleichsöffnung (7) und einen an diese anschließenden Strömungsweg (8) mit einem außerhalb des Elementinnenraums (6) gelegenen Luftraum, insbesondere dem Gebäudeinnenraum (31) oder der Außenumgebung (32) verbindbar ist sowie eine im Strömungsweg (8) angeordnete Trocknungseinrichtung (55) zur zumindest teilweisen Entfeuchtung der im Elementinnenraum (6) enthaltenen oder in diesen einströmenden Luft vorgesehen ist, wobei der Abstand (38) zwischen den Glaselementen (3, 4) aus einem Bereich mit einer unteren Grenze von 60 mm, insbesondere 80 mm, vorzugsweise 100 mm und einer oberen Grenze von 200 mm, insbesondere 175 mm, vorzugsweise 150 mm gewählt ist und im Elementinnenraum (6) eine Verschattungseinrichtung (21) umfassend verstellbare Lichtlenklamellen (24) zur Beeinflussung des Lichtdurchganges angeordnet ist, **dadurch gekennzeichnet, dass** die Lichtlenklamellen (24) eine Lamellenbreite (49) von zumindest 50 mm aufweisen und das innere Glaselement (4) durch ein Mehrscheiben-Isolierglaselement, insbesondere ein Dreischeiben-Isolierglaselement (42) gebildet ist und die Trocknungseinrichtung (55) eine Luftfördereinrichtung (104), insbesondere eine Luftpumpe (105) umfasst.

2. Glasfassadenelement (2) nach Anspruch 1, **dadurch gekennzeichnet, dass** im Strömungsweg (8) ein Ventil (51) zur Beeinflussung des Strömungsweges (8) angeordnet ist.

3. Glasfassadenelement (2) nach Anspruch 2, **dadurch gekennzeichnet, dass** das Ventil (51) eine mit einer Steuervorrichtung (53) verbundene, insbesondere elektromagnetische, Betätigungseinrichtung (52) aufweist.

4. Glasfassadenelement (2) nach Anspruch 3, **dadurch gekennzeichnet, dass** die Steuervorrichtung (53) mit zumindest einem Sensorelement (54) zur Erfassung von Lufttemperatur, Luftfeuchte oder Luftdruck verbunden ist.

5. Glasfassadenelement (2) nach Anspruch 4, **dadurch gekennzeichnet, dass** das Sensorelement (54) im Elementinnenraum (6), im Gebäudeinnenraum (31) oder der Außenumgebung (32) angeordnet ist.

6. Glasfassadenelement (2) nach einem der Ansprüche 1 bis 5, **dadurch gekennzeichnet, dass** die Trocknungseinrichtung (55) zusätzlich zum Strömungsweg (8) über einen Rückluftweg (101) mit dem Elementinnenraum (6) strömungsverbindbar ist.

7. Glasfassadenelement (2) nach einem der Ansprüche 1 bis 6, **dadurch gekennzeichnet, dass** die Trocknungseinrichtung (55) im Elementinnenraum (6) angeordnet ist und über zumindest eine Entfeuchtungsleitung (102) mit einem Luftraum außerhalb des Glasfassadenelements (2) strömungsverbindbar ist.

8. Glasfassadenelement (2) nach einem der Ansprüche 1 bis 7, **dadurch gekennzeichnet, dass** dieses zumindest ein Wegeventil (103) zur wahlweisen Verbindung der Trocknungseinrichtung (55) mit dem Elementinnenraum (6) oder mit einem außerhalb des Elementinnenraums (6) gelegenen Luftraum, insbesondere dem Gebäudeinnenraum (31) oder der Außenumgebung (32) umfasst.

9. Glasfassadenelement (2) nach einem der Ansprüche 1 bis 8, **dadurch gekennzeichnet, dass** die Trocknungseinrichtung (55) eine Beheizungseinrichtung (57) ausgewählt aus einer Gruppe umfassend ein Magnetron, ein Peltierelement, ein Widerstandsheizelement, umfasst.

10. Glasfassadenelement (2) nach einem der Ansprüche 1 bis 9, **dadurch gekennzeichnet, dass** die Trocknungseinrichtung (55) ein feuchtigkeitsadsorbierendes Trocknungsmittel (56), insbesondere Silicagel oder Zeolith enthält.

11. Glasfassadenelement (2) nach Anspruch 9 und 10, **dadurch gekennzeichnet, dass** die Beheizungseinrichtung (57) zur Regenerierung des Trocknungsmittels (56) ausgebildet ist.

12. Glasfassadenelement (2) nach einem der Ansprüche 1 bis 11, **dadurch gekennzeichnet, dass** die Trocknungseinrichtung (55) eine Kondensationstrocknungsvorrichtung mit Abgabe des Kondensats außerhalb des Elementinnenraums (6) umfasst.

13. Glasfassadenelement (2) nach Anspruch 12, **dadurch gekennzeichnet, dass** die Kondensationstrocknungsvorrichtung ein Peltierelement umfasst.

14. Glasfassadenelement (2) nach einem der Ansprüche 1 bis 13, **dadurch gekennzeichnet, dass** im Strömungsweg (8) ein Filterelement (58) zur Rückhaltung von Staub, Festkörpern und Insekten angeordnet ist.

15. Glasfassadenelement (2) nach einem der Ansprüche 1 bis 14, **dadurch gekennzeichnet, dass** der Strömungsweg (8) an seiner engsten Stelle einen Querschnitt gewählt aus einem Bereich mit einer unteren Grenze von 0,1 mm², insbesondere 1 mm² und einer oberen Grenze von 200 mm², insbesondere 100 mm² aufweist.

16. Glasfassadenelement (2) nach einem der Ansprüche 1 bis 15, **dadurch gekennzeichnet, dass** das Ventil (51), die Trocknungseinrichtung (55), die Beheizungseinrichtung (57), die Luftfördereinrichtung (104) und das Filterelement (58) in einer Belüftungseinheit (50) zusammengefasst sind.

17. Glasfassadenelement (2) nach Anspruch 16, **dadurch gekennzeichnet, dass** die Belüftungseinheit (50) außerhalb des Glasfassadenelements (2), insbesondere im Gebäudeinnenraum (31), vorzugsweise an der dem Gebäudeinnenraum (31) zugewandten Oberfläche (59) des Glasfassadenelements (2) angeordnet ist.

## Claims

1. A glass facade element (2) comprising an inner glass element (4) facing a building interior (31), an outer glass element (3) disposed parallel to said inner glass element at a distance (38) and facing an external environment (32) and at least one holding frame (5) connecting the glass elements (3, 4) together around the periphery at their edges and fixing said glass elements at a distance (38), wherein the glass elements (3, 4) and the holding frame (5) enclose the element interior (6) bounded by them in an at least substantially gas-tight manner apart from at least one pressure equalisation opening (7), and the element interior (6) can be connected, via the pressure equalisation opening (7) and a flow path (8) connected thereto, to an air space located outside the element interior (6), in particular the building interior (31) or the external environment (32), and a drying unit (55) disposed in the flow path (8) is provided for the at least partial dehumidification of the air contained in the element interior (6) or flowing into the latter, wherein the distance (38) between the glass elements (3, 4) is selected from a range with a lower limit of 60 mm, in particular 80 mm, preferably 100 mm and an upper limit of 200 mm, in particular 175 mm, preferably 150 mm, and a shading system (21) comprising adjustable light-deflecting slats (24) for influencing the passage of light is disposed in the element interior (6), **characterised in that** the light-deflecting slats (24) have a slat width (49) of at least 50 mm and the inner glass element (4) is constituted by a multi-pane insulating glass element, in particular a triple-pane insulating glass element (42), and the drying unit (55) comprises an air delivery device (104), in particular an air pump (105).

2. The glass facade element (2) according to claim 1, **characterised in that** a valve (51) for influencing the flow path (8) is disposed in the flow path (8).

3. The glass facade element (2) according to claim 2, **characterised in that** the valve (51) comprises an, in particular electromagnetic, actuating device (52) connected to a control device (53).

4. The glass facade element (2) according to claim 3, **characterised in that** the control device (53) is connected to at least one sensor element (54) for detecting air temperature, air humidity or air pressure.

5. The glass facade element (2) according to claim 4, **characterised in that** the sensor element (54) is disposed in the element interior (6), in the building interior (31) or the external environment (32).

6. The glass facade element (2) according to any one of claims 1 to 5, **characterised in that** the drying unit (55) can be connected in terms of flow, in addition to the flow path (8), via a return air path (101) to the element interior (6).

7. The glass facade element (2) according to any one of claims 1 to 6, **characterised in that** the drying unit (55) is disposed in the element interior (6) and can be connected in terms of flow via at least one dehumidification line (102) to an air space outside the glass facade element (2).

8. The glass facade element (2) according to any one of claims 1 to 7, **characterised in that** the latter comprises at least one directional control valve (103) for the optional connection of the drying unit (55) to the element interior (6) or to an air space located outside the element interior (6), in particular to the building interior (31) or to the external environment (32).

9. The glass facade element (2) according to any one of claims 1 to 8, **characterised in that** the drying unit (55) comprises a heating device (57) selected from a group comprising a magnetron, a Peltier element, a resistance heating element.

10. The glass facade element (2) according to any one of claims 1 to 9, **characterised in that** the drying unit (55) contains a moisture-adsorbing desiccant (56), in particular silica gel or zeolite.

11. The glass facade element (2) according to claim 9 and 10, **characterised in that** the heating device (57) is constituted for the regeneration of the desiccant (56).

12. The glass facade element (2) according to any one of claims 1 to 11, **characterised in that** the drying unit (55) comprises a condensation drying unit with release of the condensate outside the element interior (6).

13. The glass facade element (2) according to claim 12, **characterised in that** the condensation drying unit comprises a Peltier element.

14. The glass facade element (2) according to any one of claims 1 to 13, **characterised in that** a filter element (58) for retaining dust, solids and insects is disposed in the flow path (8).

15. The glass facade element (2) according to any one of claims 1 to 14, **characterised in that** the flow path (8) at its narrowest point has a cross-section selected from a range with a lower limit of 0.1 mm², in particular 1 mm² and an upper limit of 200 mm², in particular 100 mm².

16. The glass facade element (2) according to any one of claims 1 to 15, **characterised in that** the valve (51), the drying unit (55), the heating device (57), the air delivery device (104) and the filter element (58) are combined in a ventilation unit (50).

17. The glass facade element (2) according to claim 16, **characterised in that** the ventilation unit (50) is disposed outside the glass facade element (2), in particular in the building interior (31), preferably on a surface (59) of the glass facade element (2) facing the building interior (31).

## Revendications

1. Élément de façade en verre (2) comprenant un élément de verre interne (4) orienté vers l'intérieur d'un bâtiment (31), un élément de verre externe (3), disposé parallèlement au précédent à une distance (38), orienté vers l'environnement extérieur (32) et au moins un châssis de maintien (5) reliant entre eux les éléments de verre (3, 4) au niveau de leurs bords sur leur circonférence et les fixant à une distance (38), les éléments de verre (3, 4) et le châssis de maintien (5) entourant l'intérieur des éléments (6) entouré par ceux-ci à l'exception d'au moins une ouverture d'équilibrage de pression (7) de manière au moins approximativement étanche aux gaz et l'intérieur des éléments (6) pouvant être relié pour l'intermédiaire de l'ouverture d'équilibrage de pression (7) et d'un trajet d'écoulement (8) dans le prolongement de celle-ci, avec un interstice disposé à l'extérieur de l'intérieur des éléments (6), plus particulièrement l'intérieur du bâtiment (31) ou l'environnement extérieur (32), ainsi qu'un dispositif de séchage (55) disposé dans le trajet d'écoulement (8) pour la déshumidification au moins partielle de l'air contenu à l'intérieur des éléments (6) ou pénétrant dans celui-ci, la distance (38) entre les éléments de verre (3, 4) étant choisie dans un intervalle avec une limite inférieure de 60 mm, plus particulièrement de 80 mm, de préférence de 100 mm et une limite supérieure de 200 mm, plus particulièrement de 175 mm, de préférence de 150 mm et, à l'intérieur des éléments (6), se trouve un dispositif d'ombrage (21) comprenant des lamelles réglables (24) pour le contrôle du passage de la lumière, **caractérisé en ce que** les lamelles (24) présentent une largeur de lamelle (49) d'au moins 50 mm et l'élément de verre interne (4) est constitué d'un élément de verre isolant à plusieurs vitres, plus particulièrement un élément de verre isolant à trois vitres (42) et le dispositif de séchage (55) comprend un dispositif de refoulement d'air (104), plus particulièrement une pompe à air (105).

2. Élément de façade en verre (2) selon la revendication 1, **caractérisé en ce que**, dans le trajet d'écoulement (8) se trouve une soupape (51) pour le contrôle du trajet d'écoulement (8).

3. Élément de façade en verre (2) selon la revendication 2, **caractérisé en ce que** la soupape (51) comprend un dispositif d'actionnement (52), plus particulièrement électromagnétique, relié à un dispositif de commande (53).

4. Élément de façade en verre (2) selon la revendication 3, **caractérisé en ce que** le dispositif de commande (53) est relié avec au moins un élément de capteur (54) pour la mesure de la température, de l'humidité ou de la pression de l'air.

5. Élément de façade en verre (2) selon la revendication 4, **caractérisé en ce que** l'élément de capteur (54) est disposé à l'intérieur des éléments (6), à l'intérieur du bâtiment (31) ou dans l'environnement extérieur (32).

6. Élément de façade en verre (2) selon l'une des revendications 1 à 5, **caractérisé en ce que** le dispositif de séchage (55) peut en outre être relié en écoulement, en plus du trajet d'écoulement (8), par l'intermédiaire d'un trajet de retour (101), avec l'intérieur des éléments (6).

7. Élément de façade en verre (2) selon l'une des revendications 1 à 6, **caractérisé en ce que** le dispositif de séchage (55) se trouve dans l'intérieur des éléments (6) et peut être relié en écoulement, par l'intermédiaire d'une conduite de déshumidification (102), avec un interstice à l'extérieur de l'élément de façade en verre (2).

8. Élément de façade en verre (2) selon l'une des revendications 1 à 7, **caractérisé en ce que** cette au moins une soupape (103) comprend, pour la liaison sélective du dispositif de séchage (55), avec l'intérieur des éléments (6) ou avec un interstice se trouvant à l'extérieur de l'intérieur des éléments (6), plus particulièrement l'intérieur du bâtiment (31) ou l'environnement extérieur (32).

9. Élément de façade en verre (2) selon l'une des revendications 1 à 8, **caractérisé en ce que** le dispositif de séchage (55) comprend un dispositif de chauffage (57) choisi parmi un groupe comprenant un magnétron, un élément de Peltier, un élément de chauffage à résistance.

10. Élément de façade en verre (2) selon l'une des revendications 1 à 9, **caractérisé en ce que** le dispositif de séchage (55) contient un produit de séchage (56) absorbant l'humidité, plus particulièrement du gel de silice ou de la zéolithe.

11. Élément de façade en verre (2) selon les revendications 9 et 10, **caractérisé en ce que** le dispositif de chauffage (57) est conçu pour régénérer le produit de séchage (56).

12. Élément de façade en verre (2) selon l'une des revendications 1 à 11, **caractérisé en ce que** le dispositif de séchage (55) comprend un dispositif de séchage par condensation avec distribution du condensat à l'extérieur de l'intérieur des éléments (6).

13. Élément de façade en verre (2) selon la revendication 12, **caractérisé en ce que** le dispositif de séchage par condensation comprend un élément Peltier.

14. Élément de façade en verre (2) selon l'une des revendications 1 à 13, **caractérisé en ce que**, dans le trajet d'écoulement (8), se trouve un élément filtrant (58) pour retenir les poussières, les corps solides et les insectes.

15. Élément de façade en verre (2) selon l'une des revendications 1 à 14, **caractérisé en ce que** le trajet d'écoulement (8) présente, à son endroit le plus étroit, une section choisie dans un intervalle avec une limite inférieure de 0,1 mm², plus particulièrement de 1 mm² et une limite supérieure de 200 mm², plus particulièrement de 100 mm².

16. Élément de façade en verre (2) selon l'une des revendications 1 à 15, **caractérisé en ce que** la soupape (51), le dispositif de séchage (55), le dispositif de chauffage (57), le dispositif de refoulement d'air (104) et l'élément filtrant (58) sont regroupés dans une unité de ventilation (50).

17. Élément de façade en verre (2) selon la revendication 16, **caractérisé en ce que** l'unité de ventilation (50) est disposée à l'extérieur de l'élément de façade en verre (2), plus particulièrement à l'intérieur du bâtiment (31), de préférence sur la surface (59) de l'élément de façade en verre (2) orientée vers l'intérieur du bâtiment (31).
